(19) Europäisches Patentamt
European Patent Office
Office européen des brevets

(11) **EP 1 200 905 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(21) Anmeldenummer: **99929167.7**

(22) Anmeldetag: **10.06.1999**

(51) Int Cl.:
***G06F 17/14*** *(2006.01)*

(86) Internationale Anmeldenummer:
**PCT/EP1999/003995**

(87) Internationale Veröffentlichungsnummer:
**WO 2000/077674 (21.12.2000 Gazette 2000/51)**

(54) **ERKENNUNG EINES NUTZSIGNALS IN EINEM MESSSIGNAL**

RECOGNITION OF A USEFUL SIGNAL IN A MEASUREMENT SIGNAL

RECONNAISSANCE D'UN SIGNAL UTILE DANS UN SIGNAL DE MESURE

(84) Benannte Vertragsstaaten:
**AT BE CH CY DE DK ES FI FR GB GR IE IT LI LU MC NL PT SE**

(43) Veröffentlichungstag der Anmeldung:
**02.05.2002 Patentblatt 2002/18**

(73) Patentinhaber: **Koninklijke Philips N.V.**
**5656 AE Eindhoven (NL)**

(72) Erfinder: **KÄSTLE, Siegfried**
**D-71154 Nufringen (DE)**

(74) Vertreter: **de Haan, Poul Erik et al**
**Philips International B.V.**
**Philips Intellectual Property & Standards**
**High Tech Campus 5**
**5656 AE Eindhoven (NL)**

(56) Entgegenhaltungen:
**EP-A- 0 335 357      EP-A- 0 623 882**
**EP-A- 0 870 466      EP-B- 0 114 463**
**DE-A- 4 220 429      FR-A- 2 724 029**
**US-A- 5 400 795**

**Beschreibung**

HINTERGRUND DER ERFINDUNG

Die vorliegende Erfindung betrifft die Erkennung eines Nutzsignals in einem Meßsignal.

Die Messung von Signalen kann im allgemeinen grob unterteilt werden in a) die Erkennung einzelner, mehr oder weniger singulärer Ereignisse und b) die Überwachung mehr oder minder häufig sich wiederholender, im wesentlichen periodischer Signale. In beiden Fällen begrenzen überlagernde Störungen den Aussagewert der Messung und es gilt diese Störungen zu vermeiden, zu unterdrücken, oder herauszufiltern.

Als periodische Signale sollen hier solche Signale verstanden werden, bei denen das Nutzsignal, zumindest über einen bestimmten Zeitraum, mindestens einen periodischen Anteil hat, dessen Frequenz allerdings zeitabhängig sein kann.

Insbesondere im medizinischen Bereich der Patientenüberwachung ist die Erkennung des Nutzsignals und Unterdrückung von Störungen wesentlich, da Störungen zu falschen Interpretationen der Meßwerte führen oder die Messung insgesamt unbrauchbar machen können.

Eine Messung, die sich als besonders sensibel für Störeinflüsse gezeigt hat, ist die pulsoximetrische Bestimmung des Sauerstoffgehaltes des Blutes, da die Pulsoximetrie vielfach stärker beeinflußt ist durch Bewegungsartefakte, als durch das den Blutsauerstoff bestimmende Pulssignal. Bei der Pulsoximetrie geht es um die nicht-invasive, kontinuierliche Bestimmung des Sauerstoffgehalts des Blutes (Oximetrie), basierend auf der Analyse des photospektrometrisch gemessenen Pulses. Dazu ist es notwendig, daß eine Pulskurve (Plethysmogramm) bei mehreren Wellenlängen vorliegt. Praktisch arbeiten so gut wie alle Geräte mit nur zwei Wellenlängen, wodurch kostengünstige, kompakte Lösungen möglich sind. Das Prinzip der Photometrie basiert darauf, daß die Menge des absorbierten Lichtes durch den Absorptionsgrad einer Substanz und durch die Wellenlänge bestimmt ist. Pulsoximeter machen davon Gebrauch, daß das arterielle Blutvolumen, und nur das arterielle Blutvolumen, im Rhythmus des Herzschlages pulsiert. Um von den ermittelten Meßdaten auf den Wert der Sauerstoffsättigung schließen zu können, wird ein Werteverhältnis (zumeist "Ratio" genannt) aus den Meßdaten abgeleitet, das dann den Sauerstoffsättigungswert repräsentiert. Die Grundlagen und Anwendungsmöglichkeiten der Pulsoximetrie sind allgemein bekannt und vielfach beschrieben, insbesondere in EP-A-262778 (mit einem guten Abriß der Theorie), US-A-4,167,331 oder von Kästle et. al. in "A New Family of Sensors for Pulsoximetry", Hewlett-Packard Journal, Vol. 48, No. 1, S. 39-53, Februar 1997.

Für die pulsoximetrische Messung sind als Methoden zur Artefakterkennung und - unterdrückung insbesondere Verfahren im Zeitbereich, adaptive Filter Spektralanalysen sowie Verfahren im Zeit-Frequenz-Bereich vorgeschlagen worden. Eine detaillierte Aufstellung dieser (im Kontext dieser Anmeldung weniger interessierenden) Methoden der Artefaktunterdrückung wird in der Internationalen Patentanmeldung der Anmelderin vom selben Anmeldetag (Internes Aktenzeichen 20-99-0010) gegeben.

Während bei den oben angeführten Methoden zur Artefakterkennung und -unterdrückung das Nutzsignal möglichst unangetastet bleiben soll, und nur die Artefakte eliminiert werden sollen, sind im Stand der Technik auch solche Methoden bekannt, bei denen (umgekehrt) aus dem Meßsignal (nur) das Nutzsignal herausgefüttert werden soll. Neben den (im Kontext dieser Erfindung wiederum weniger interessierenden) Verfahren im Zeitbereich haben sich zur Ermittlung oder Filterung eines periodischen Nutzsignals aus einem mehr oder minder gestörten Meßsignal insbesondere solche Methoden als vorteilhaft erwiesen, bei denen die Meßsignale im Frequenzbereich untersucht werden. Derartige Methoden für die Anwendung in der Pulsoximetrie werden u.a. beschrieben in US-A-5,575,284 (Athan), WO-A-96 12435 (Masimo) oder EP-A-870466 (Kästle).

Gemäß WO-A-96 12435 erfolgt nach Transformation der pulsoximetrischen Meßwerte in den Frequenzraum eine Selektion als Nutzsignal durch Ermittlung des Frequenzanteils mit der stärksten Amplitude.

EP-A-870466, desselben Erfinders und derselben Anmelderin, offenbart ein Verfahren zur Selektion des pulsoximetrischen Signals nach der physiologischen Relevanz der Frequenzanteile. Nach optionaler Unterdrückung des Gleichanteils der beiden pulsoximetrischen Rohsignale (Rot und Infrarot) werden die sich in einem laufenden Zeitfenster befindenden Rohsignalwerte durch Fourier-Transformation (hier: Fast Fourier Transformation - FFT) in den Frequenzraum transformiert. Aus den transformierten Rohsignalen werden für alle Frequenzpunkte Verhältnisse (das sogenannte "Ratio") der Koeffizienten des Amplitudenspektrums gebildet. Bei graphischem Auftragen des Infrarotspektrums in x-Richtung und des Rotspektrums in y-Richtung wird eine Darstellung erhalten, die nadelähnliche Spitzen aufweist. Diese Nadel entsprechen den Peaks (Spitzen) der Spektren, wobei für ungestörte Signale sehr dünne Nadeln erhalten werden und die jeweiligen Nadeln der Grund- und harmonischen Oberwellen aufeinanderliegen. Der Winkel der Nadeln gegenüber den Achsen entspricht dabei dem Sättigungswert. Da die Repräsentation der Spektren in dieser Darstellung Ähnlichkeit mit einem Nadelkissen aufweist, wird die Methodik der EP-A-870466 auch als "Nadelkissenalgorithmus" bezeichnet.

Zur Identifizierung der Nadel, die das pulsoximetrische Signal repräsentiert, wird im Nadelkissenalgorithmus zunächst ein Abstandsspektrum aus den komplexen Amplituden der Rot- und Infrarotspektren ermittelt. Das Abstandsspektrum beschreibt die Distanz jedes einzelnen Stützpunktes im Nadeldiagramm vom Ursprung. Aus diesem Abstandsspektrum werden die einzelnen Nadeln durch Betrachtung der Maxima und der damit verbundenen Fußpunkten ermittelt. Nur solche Nadeln, die eine Reihe gegebener Kriterien erfüllen, werden für die weiteren Betrachtungen beibehalten. Die so reduzierte Auswahl von Nadeln wird einer weiteren Klassifizierung unterzogen. Nadeln die das Nutzsignal repräsentieren, müssen dabei als Kriterien erfüllen, daß: die Peaks gut in eine harmonische Frequenzserie passen, so viele wie mögliche harmonische Wellen vorhanden sind, die Nadeln möglichst dünn sind und die Frequenz der Grundwelle sowie der Sättigungswert, die Perfusion und die Pulsrate in physiologischen Bereichen liegen. Dabei erfolgt eine Gesamtbewertung für jede Nadel durch Punktvergabe bzw. K.O.-Kriterium für jedes dieser Kriterien. Die Nadel, die die meisten Punkte erhält, oder anders gesagt, die den Kriterien am besten gerecht wird, und zumindest eine Minimalanzahl an Punkten erhalten hat, wird zur Ermittlung des Ausgabewertes für den pulsoximetrischen Meßwert herangezogen. Optional kann als Plausibilitätskontrolle noch ein Vergleich mit vorangegangenen Ausgabewerten herangezogen werden, und bei signifikantem Abweichen von den vorausgegangenen Ausgabewerten wird der neu ermittelte Ausgabewert verworfen, und es kommt kein neuer Wert zur Anzeige.

Aus EP-A-0 335 357 ist ein Verfahren bekannt zur Berechnung der Konzentration eines Blutbestandteils anhand der Blutflußmerkmale eines Patienten durch Detektieren eines der Absorption von Licht entsprechenden Absorptionssignals, die gemessen wird bei zwei oder mehr Wellenlängen in dem Gewebe des Patienten mit periodischen Änderungen der Amplitude, die durch periodische arterielle Pulse in den Blutflußmerkmalen in Beziehung zu dem Herzschlag des Patienten verursacht werden, und aperiodische Änderungen der Amplitude ohne Beziehung zu dem Herzschlag des Patienten. Das Verfahren ist für jede der gemessenen Wellenlängen gekennzeichnet durch das Erhalten eines Zeitmaßes des Absorptionssignals mit periodischen Informationen und aperiodischen Informationen: das kollektive Verarbeiten des Zeitmaßes, um eine zusammengesetzte Wellenform mit einer den periodischen Informationen in dem Zeitmaß entsprechenden relativen Maximum- und Minimumamplitude zu bestimmen, wobei die zusammengesetzte Wellenform einer Frequenzdomänen-Transformation eines komplexen Datensatzes entspricht, der aus dem Zeitmaß abgeleitet ist; und das anschließende Berechnen der Konzentration des Blutbestandteils anhand der relativen Maximum- und Minimumamplitude der zusammengesetzten periodischen Wellenform der detektierten Wellenlängen.

Die Verfahren zur Ermittlung des Nutzsignals durch Transformation in den Frequenzraum haben sich als deutlich störungsunempfindlicher gegenüber den Filterverfahren im Zeitbereich erwiesen. Allerdings kann es auch hier bei diesen Methoden im Frequenzbereich, je nach Störungssituation, zu Unsicherheiten kommen, in denen entweder vorsichtshalber kein Wert oder nur ein mit Fragezeichen behafteter Wert ausgegeben werden kann.

## ZUSAMMENFASSUNG DER ERFINDUNG

Es ist deshalb Aufgabe der vorliegenden Erfindung, die Erkennung eines periodischen Nutzsignals in einem ermittelten Meßsignal weiter zu verbessern. Die Aufgabe wird gelöst durch die Merkmale der unabhängigen Ansprüche. Vorteilhafte Ausführungsformen sind in den abhängigen Ansprüchen angeführt.

Erfindungsgemäß erfolgt die Erkennung eines periodischen Nutzsignals in einem (gestörten) Meßsignal durch einen mehrstufigen Prozeß:

In einem ersten Schritt erfolgt eine **Transformation** für ein gegebenes Zeitfenster des Meßsignals in den Frequenzbereich. Hierfür eignet sich insbesondere die Fast-Fourier-Transformation (FFT), jedoch können auch beliebige andere Transformationen verwendet werden.

Optional kann eine Filterung des Meßsignals der Transformation vorausgehen oder sich dieser anschließen. Vorzugsweise erfolgt eine derartige Filterung z.B. durch Reduzierung des Gleichanteils (insbesondere wie beschrieben in EP-A-870466 oder EP-A-870465) und/oder durch Unterdrückung transienter Störungen (insbesondere wie beschrieben in der oben angeführten Internationalen Patentanmeldung der Anmelderin vom selben Anmeldetag mit dem internen Aktenzeichen: 20-99-0010).

In einem zweiten Schritt erfolgt eine **Identifikation** von Frequenzpeaks (oder auch *Nadeln* genannt) in dem transformierten Zeitfenster des Meßsignals. Eine derartige Identifikation kann vorzugsweise unter Zuhilfenahme eines Abstandsspektrums, wie oben für den Nadelkissenalgorithmus des EP-A-870466 beschrieben, erfolgen.

In einem dritten Schritt erfolgt eine Zuordnung identifizierter Frequenzpeaks des aktuellen Zeitfensters **zu zeitlichen Verläufen** (oder auch *Fäden* genannt) identifizierter Frequenzpeaks eines oder mehrerer vorangegangener Zeitfenster, insofern identifizierte Frequenzpeaks bereits vorliegen. Vorzugsweise erfolgt diese *"Verkettung der Nadeln zu Fäden"* durch eine Initialisierung z.B. bei einem Neustart, wobei der erste erhaltene Satz von Nadeln genommen wird, um einen Satz von Fäden zu gründen. Dem kann sich eine fortlaufende Angliederung passender Nadeln anschließen, wobei eine Nadel als passend angesehen wird, wenn sich zum letzten Glied im Faden wenig Abweichungen bezüglich vorgegebener Kriterien ergeben. Vorzugsweise wird dabei die Entscheidung, ob eine Nadel als passend angesehen wird, mit Hilfe einer Verknüpfung gegebener Kriterien durch eine unscharfe Logik, wie der Fuzzy-Logic, durchgeführt. Kann dann einem vorhandenen Faden keine neue Nadel zugeordnet werden, so bleibt vorzugsweise eine Lücke, und der Faden kann entweder beendet oder durch einen neuen Faden ersetzt werden, sofern die Lücke zu lang wird (vorzugsweise etwa 30 s).

In einem vierten Schritt erfolgt eine **Zuordnung der zeitlichen Verläufe** (Fäden) **zu** einer oder mehreren **Familien,** die jeweils aus einer Grundwelle und einer oder mehreren Oberwellen bestehen. Eine derartige Zuordnung oder Verkettung der Fäden zu Harmonischen erfolgt vorzugsweise durch Untersuchung, inwieweit bestimmte charakteristische Merkmale zwischen den Fäden existieren, die gemeinsam darauf hindeuten, daß die Fäden zum gleichen Nutzsignal gehören. Eine solche Untersuchung erfolgt vorzugsweise durch Verknüpfung geeigneter Kriterien wie harmonische Frequenzbeziehung, erwarteter Amplitudenabfall der Oberwellenreihe und/oder verhältnisgleiche Trendentwicklung der Frequenzen und/oder Amplituden. Der Verknüpfung der Kriterien erfolgt vorzugsweise ebenfalls durch eine unscharfe Logik wie die Fuzzy-Logic.

In einem fünften Schritt erfolgt dann eine **Auswahl einer Familie** als diejenige, die das Nutzsignal repräsentieren soll. Bei der Formulierung "repräsentieren soll" ist zu verstehen, daß die Frage, ob die ausgewählte Familie auch tatsächlich das Nutzsignal repräsentiert, gerade auch von den verwendeten Auswahlkriterien abhängt. Da allerdings, außer bei simulierten Signalverhältnissen, nie mit absoluter Gewißheit eine Familie als die wahre", das Nutzsignal repräsentierende Familie erkannt werden kann, muß die Auswahl immer im Sinne einer höchsten Wahrscheinlichkeit (für das Repräsentieren des Nutzsignals durch die ausgewählte Familie) betrachtet werden.

Vorzugsweise erfolgt die Auswahl einer Familie ebenfalls durch Verknüpfung vorgegebener Kriterien wie Existenz von Grundwelle, erster Oberwelle und zweiter Oberwelle, durchschnittliche Paßgenauigkeit der Fäden, Anzahl der gültigen Nadeln in einem Faden (d.h. die Länge des Fadens), Stetigkeit bzw. "Löchrigkeit" eines Fadens, und Beziehungsgüte zwischen Grundwelle und erster Oberwelle. Grundwelle und zweiter Oberwelle sowie erster Oberwelle zur zweiten Oberwelle. Die Verknüpfung der Kriterien erfolgt vorzugsweise ebenfalls durch eine unscharfe Logik wie die Fuzzy-Logic.

Die Auswahl einer Familie kann auch oder zusätzlich durch eine Plausibilitätsüberprüfung der Familie gegenüber vorangegangenen Ausgabewerten erfolgen, wobei die plausibelste Familie ausgewählt wird.

**Aus der ausgewählten Familie** wird schließlich in einem sechsten Schritt **ein Frequenzpeak** des aktuellen Zeitfensters als derjenige **ausgewählt,** der den Meßwert des Nutzsignals in diesem Zeitfenster repräsentieren soll. Aus diesem ausgewählten Frequenzpeak kann dann der aktuelle Meßwert des Nutzsignals berechnet oder anderweitig ermittelt werden, insoweit dieser dem Meßwert nicht bereits entspricht. Die Formulierung "repräsentieren soll" ist auch hier so zu verstehen, daß die Auswahl im Sinne einer höchsten Wahrscheinlichkeit (für das Repräsentieren des Meßwerts des Nutzsignals durch den ausgewählten Frequenzpeak) betrachtet wird.

Die Auswahl des den aktuellen Meßwert des Nutzsignals repräsentierenden Frequenzpeaks erfolgt vorzugsweise durch Verknüpfung vorgegebener Kriterien mittels einer unscharfen Logik wie der Fuzzy-Logic. Als Kriterien werden dabei vorzugsweise solche Kriterien angewandt, die auf eine Plausibilität des aktuellen Meßwertes gegenüber vorangegangenen Meßwerten und/oder gegenüber erwarteten oder sinnvollen Werten abgestellt sind.

Optional kann nach Auswahl des Frequenzpeaks im sechsten Schritt eine Plausibilitätsüberprüfung durchgeführt werden, um zu überprüfen, ob der ausgewählte Frequenzpeak auch tatsächlich einem erwarteten Meßwert des Nutzsignals entspricht und ob gegebenenfalls ein von dem ausgewählten Frequenzpeak abgeleiteter Meßwert zu einer Ausgabe gelangen soll, oder ob für dieses Zeitfenster überhaupt kein Meßwert ausgegeben werden soll. Eine derartige Plausibiltätsüberprüfung erfolgt vorzugsweise durch einen Vergleich des aktuellen Meßwertes mit vorangegangenen Meßwerten und/oder mit erwarteten oder sinnvollen Werten.

Vorzugsweise erfolgt die Ausgabe eines Meßwertes für das aktuelle Zeitfenster zusammen mit einem **Qualitätsindikator,** der eine quantitative Aussage über die Zuverlässigkeit des ausgegebenen Meßwerts trifft. Vorzugsweise wird dieser Qualitätsindikator entsprechend der Internationalen Patentanmeldung desselben Anmelders mit demselben Anmeldetag (internes Aktenzeichen 20-99-0011) ermittelt. Die Beschreibung der Ermittlung des Qualitätsindikators in dieser Patentanmeldung sei durch Bezugnahme ebenfalls Bestandteil der vorliegenden Offenbarung.

Die vorliegende Erfindung findet Anwendung vorzugsweise für die Nutzsignalfilterung medizinischer Meßsignale, wie im Bereich der Pulsoximetrie, der Blutdruckmessung (invasiv oder nicht-invasiv) oder der Herzfrequenzbestimmung mittels EKG oder Ultraschall. Allerdings ist die Erfindung nicht auf die Signalfilterung insbesondere in der hier dargestellten Pulsoximetrie begrenzt, sondern läßt sich für die Nutzsignalfilterung beliebiger Meßsignale anwenden.

Ebenso kann die Erfindung auch zur Nutzsignalfilterung solcher Anwendungen verwendet werden, bei denen die Meßwerte nur aus einem oder aber aus mehreren Rohsignalen ermittelt werden.

Zur Verknüpfung von Kriterien und Faktoren werden in bevorzugten Ausführungsformen die Prinzipien der bekannten Fuzzy-Logic angewendet, wie sie insbesondere in Altrock C, "Fuzzy Logic: Band 1, Technologie", Oldenburg Verlag, München, 1995 im Detail beschrieben werden und hier unter Verweis auf diese und andere Grundlagenliteratur nicht näher aufgeführt werden sollen.

Während in dem in EP-A-870466 beschriebenen Nadelkissenalgorithmus die Vergangenheitswerte lediglich zur Auswahl einer auszugebenden Nadel aus der Grundwelle berücksichtigt werden, erfolgt gemäß der Erfindung eine Berücksichtigung der Vergangenheitswerte zur Auswahl einer harmonischen Familie von Fäden, die sowohl Grundwelle als auch Oberwelle(n) enthalten. Aus der ausgewählten harmonischen Familie wiederum erfolgt dann die Auswahl eines Familienmitgliedes aus der ausgewählten Familie, das den aktuellen Meßwert des Nutzsignals repräsentieren soll. Die erfindungsgemäße Auswahl einer harmonischen Familie erlaubt somit, daß, falls die Grundwelle gestört ist, auch eine Oberwelle als Familienmitglied ausgewählt werden kann, und umgekehrt, und erhöht somit deutlich die Sicherheit und Zuverlässigkeit des Auswahlprozesses und damit auch die Glaubwürdigkeit des gegebenenfalls ermittelten Nutzsignalmeßwertes. Vorteilhaft insbesondere auch gegenüber dem angeführten Nadelkissenalgorithmus ist ferner, daß vorangegangene Zeitfenster auch für die Auswahl der Familienmitglieder berücksichtigt werden. Bei dem Nadelkissenalgorithmus, im Gegensatz dazu, werden vorangegangene Zeitfenster lediglich für eine Punktbewertung für die Grundwelle herangezogen.

Insgesamt führt die Anwendung der erfindungsgemäßen Nutzsignalfilterung zu einer spürbaren Verbesserung insbesondere bei der Erkennung des Nutzsignals unter schwierigen Störverhältnissen. Insbesondere auch bei vorangegangener Störungsfilterung gemäß der angeführten Internationalen Patentanmeldung (internes Aktenzeichen der Anmelderin 20-99-0010) lassen sich damit immer schwierigere Meßsituationen bewältigen, und bei weiterer Ermittlung und Anzeige eines Qualitätsindikators gemäß der Internationalen Patentanmeldung (internes Aktenzeichen der Anmelderin 20-99-0011) kann die Zuverlässigkeit und Aussagefähigkeit gerade bei schwierigen Messungen, wie in der Pulsoximetrie, zudem deutlich erhöht werden.

## KURZE BESCHREIBUNG DER ZEICHNUNGEN

Die Erfindung wird im Folgenden weiter unter Heranziehung der Zeichnungen erläutert, wobei sich gleiche Referenzzeichen auf gleiche oder funktional gleiche oder ähnliche Merkmale beziehen.

Fig. 1 stellt in einem Blockbild die Verarbeitungsgliederung gemäß einer bevorzugten Ausführungsform der Erfindung dar,

Fign. 2A und 2B zeigen ein Beispiel eines gestörten pulsoximetrischen Signals in Frequenzdarstellung und als Nadeldiagramm,

Fig. 3 zeigt ein Beispiel eines Abstandsspektrums 300 für einen relativ ungestörten Standardfall,

Fign. 4 zeigen $SpO_2$-Wert, Schwerpunktfrequenz, Perfusionsanteil und Paßgenauigkeit einer störungsarmen (Fig. 4A), einer gestörten (Fig. 4B) und einer erfindungsgemäß entstörten (Fig. 4C) Episode, und

Fig. 5 zeigt eine schematische Darstellung einer Ausgabespeicherbefüllung durch Nutzung der Oberwellen.

## DETAILLIERTERE BESCHREIBUNG DER ZEICHNUNGEN

Im Folgenden soll ein bevorzugtes Anwendungsbeispiel für eine erfindungsgemäße Erkennung eines periodischen Nutzsignals in einem gestörten Meßsignal bei der Ermittlung der Sauerstoffsättigung dargestellt werden. Da es sich bei der Bestimmung der Sauerstoffsättigung um hinlänglich bekannte Verfahren handelt, sollen diese hier im einzelnen nicht näher dargestellt werden, und für Details wird insbesondere auf die eingangs angeführten Referenzen verwiesen.

Insbesondere sei auch auf den Nadelkissenalgorithmus des EP-A-870466 verwiesen, der ebenfalls die Auswahl des "richtigen" Frequenzpeaks im Fourierraum zum Gegenstand hat. Bis auf die Auswahl als solche lassen sich daher viele der in EP-A-870466 beschriebenen Verfahrensschritte analog auf die Erfindung anwenden.

Wie bereits eingangs erwähnt, entspricht es der üblichen Pulsoximetrie-Methode die Signale im Zeitbereich zu filtern, zu bewerten und dann die entsprechenden Rot- und Infrarot-Amplituden in Beziehung zu setzen. Im Gegensatz dazu basiert die Grundidee sowohl des bekannten Nadelkissenalgorithmus (EP-A-870466) als auch der erfindungsgemäßen Ausführungsform (im Folgenden auch Fuzzy-Nadel-Algorithmus - FNA - genannt) darauf, die Signale einer Frequenztransformation zu unterwerfen und dann die transformierten Signale zu filtern, zu bewerten und die Transformationskoeffizienten zur Bestimmung der Pulsoximeter-Ergebnisse wie Sauerstoffsättigung, Pulsfrequenz und Perfusionsindex heranzuziehen.

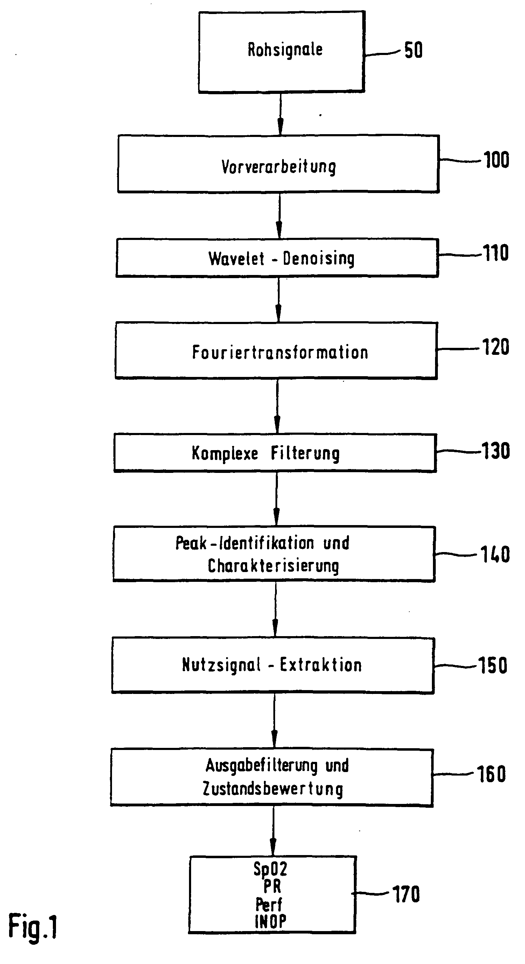

Figur 1 stellt in einem Blockbild die Verarbeitungsgliederung gemäß einer bevorzugten Ausführungsform der Erfindung dar. Das gesamte Verfahren wird zyklisch mit einem Takt von vorzugsweise einer Sekunde wiederholt, d.h. jede Sekunde ist ein Auffrischen der Ausgabewerte möglich.

Zunächst werden die beiden gemessenen Rohsignale (Block 50) für Rot und Infrarot (IR) einer Vorverarbeitung in einem Schritt 100 unterzogen. Hierbei wird jedes Rohsignal kontinuierlich auf seinen gleitenden DC-Wert normiert. Das Verhältnis der beiden hierdurch entstandenen Signale steht nun schon in einer direkten Beziehung zum $SpO_2$-Wert. Diese Signale enthalten neben den Nutzsignalen auch noch alle möglichen Störkomponenten, die in das Basisband (0 bis etwa 10 Hz) der Pulsoximetrie fallen.

Ein erster Schritt die Artefaktkomponenten zu eliminieren wird in einer Wavelet-Entstörungsstufe (Wavelet-Denoising) 110 unternommen. Dazu werden die Signale zunächst in kurze Abschnitte geteilt, vorzugsweise Fenster von 8 Sekunden, und mittels geeigneter Wavelets in Koeffizienten zerlegt. Die Wavelet-Koeffizienten werden manipuliert mit dem Ziel, besonders artefakthaltige Frequenz- und Zeitbereiche zu unterdrücken. Mit diesen modifizierten Wavelet-Koeffizienten wird anschließend die Rücktransformation in den Zeitbereich vorgenommen. Für weitere Einzelheiten der Wavelet-Entstörung wird auf die Internationale Patentanmeldung (internes Aktenzeichen: 20-99-0010) derselben Anmelderin mit demselben Anmeldetag verwiesen, und deren Gegenstand bezüglich der Wavelet-Entstörung sei durch Inbezugnahme Gegenstand der vorliegenden Offenbarung. Wavelet-Transformationen werden insbesondere in Mallat SG, ,,A Wavelet Tool Of Signal Processing, Academic Press, San Diego, 1998, Wickerhauser MV "Adaptive Wavelet-Analysis", Vieweg&Sohn Braunschweig, 1996, oder Daubechies I, "Ten Lectures on Wavelets", CBMS Vol. 61 SIAM Press Philadelphia, PA, 1992, beschrieben.

In einer dritten Stufe 120 findet eine Kurzzeit-Fourier-Transformation (FFT) statt, ebenfalls abschnittsweise basierend auf den oben zurückerhaltenen Signalabschnitten.

Nun folgt eine weitere Stufe 130 der Störunterdrückung (Realteilfilterung). Die beiden gewonnenen komplexen Spektren (Rot und Infrarot) werden in der komplexen Frequenzebene miteinander in fadenmäßige Beziehung gesetzt und aufeinander abgebildet. Dies stellt eine Maßnahme dar, die besonders zur Unterdrückung unkorrelierter Störungselemente beiträgt. Solche Störungen findet man zum Beispiel bei sehr schwachen Signalen, wenn der Anteil von opto-elektrischen Rauschen hoch wird.

Nachdem aus den komplexwertigen Rot/Infrarot-Spektren die jeweiligen Amplitudenspektren generiert wurden, gilt es in einer Stufe 140, einzelne Peaks (wegen ihrer Form in der parametrischen Darstellung in der "Ratio" - Ebene auch "Nadeln" genannt) zu identifizieren und zu charakterisieren. Bei einem störungsarmen Signal sind das im wesentlichen die Grund- und Oberwellen des Plethysmogramms. Pro Algorithmus-Zyklus werden vorzugsweise bis zu 10 solcher Peaks isoliert. Jeder dieser Peaks kann unter anderem mit einem bestimmten $SpO_2$-Wert, einer Frequenz und einer Amplitude charakterisiert werden.

In einem Schritt 150 werden nun alle Peaks, die im momentanen Zyklus gewonnen wurden, mit den Peaks aus der Vergangenheit sinnvoll verkettet, so daß zusammenhängende Peak-Muster (auch Fäden genannt) erhalten werden. Diese Fäden werden dann nach ihrer "Stärke" bewertet und nach Harmoniekriterien zu "Familien" zusammengestellt. Der Begriff der Harmonie ist dabei über die frequenzmäßige Beziehung hinaus zu sehen. Steht nun eine Zahl von Familien zur Verfügung, wird mit einigen weiteren Relativkriterien bestimmt, welche der Familien das Nutzsignal repräsentiert. Die Eigenschaften der Mitglieder dieser selektierten Familie werden dann dazu verwendet, die gewünschten Ausgabewerte zu ermitteln. Diese Bewertungsaufgaben sind bei Störungen eine sehr diffizile Sache. Es hat sich gezeigt, daß zahlreiche komplexe Verknüpfungen vorgenommen werden sollten, um ein robustes Erkennungssystem zu erhalten, das treffsicher zwischen Nutzsignal und Artefakt unterscheiden kann. Diese Aufgabe kann vorzugsweise durch den Einsatz einer unscharfen Logik, wie der Fuzzy-Logic erfolgreich und übersichtlich durchgeführt werden.

In einem Schritt 160 erfolgt schließlich eine Ausgabe-Filterung und Zustandsbewertung. Ein nicht-lineares, adaptives Filter sorgt für eine Glättung der Anzeigewerte, die besonders in stark gestörten Situationen notwendig ist. Die in der Stufe 150 gewonnenen Spontanwerte werden zunächst in einen, vorzugsweise 60 Sekunden tiefen, Ausgabespeicher übergeben, aus dem dann je nach Signalqualität ein mehr oder weniger weit in die Vergangenheit zurückreichender Mittelwert gebildet wird. Außerdem kann hier noch eine Bewertung der momentanen Signalqualität und des Signalverlaufs der jüngsten Vergangenheit stattfinden, um zu entscheiden, ob die Ausgabewerte ausgeblendet werden sollen (das heißt zum Beispiel die Anzeige auf "-?-" oder "0" zu setzen), weil eine zuverlässige Ableitung nicht gewährleistet werden kann. Hinsichtlich der Bewertung der Signalqualität sei im einzelnen auf die Internationale Patentanmeldung (internes Aktenzeichen 20-99-0011) derselben Anmelderin mit demselben Anmeldetag verwiesen, und deren Gegenstand hinsichtlich der Bewertung der momentanen Signalqualität sei durch Inbezugnahme Gegenstand der vorliegenden Offenbarung.

In einem letzten Schritt 170 können nun die ermittelten Meßwerte, wie der $SpO_2$-Wert, der Pulsrate (PR), der Perfusionsindex (Perf) und gegebenenfalls kein Ausgabewert (INOP) zu einer Anzeige gebracht werden.

Es ist zu verstehen, daß insbesondere die Schritte 100, 110 und 130 für die Ausführung der vorliegenden Erfindung nicht erforderlich sind, jedoch als optionale Schritte zur Signalverbesserung vorzugsweise durchgeführt werden. Ferner ist auch der Schritt 160 für den Gegenstand der Erfindung nicht wesentlich, erlaubt jedoch auch hier hinsichtlich der Ausgabezuverlässigkeit eine weitere Verbesserung. Schließlich ist auch der Anzeigeschritt 170 nur optional, und die gewonnenen Meßwerte können zum Beispiel für eine anderweitige Weiterverarbeitung herangezogen werden. Auf die Schritte 100-130 soll im Folgenden nicht weiter eingegangen werden, da es sich hierbei um im Stand der Technik bekannte und für den Gegenstand der Erfindung im einzelnen nicht näher interessierende Verfahrensschritte handelt.

Als Ergebnis der Verarbeitungsstufen 100-130 liegt ein Gleichanteil- (DC) -normiertes Spektrum für Rot und Infrarot vor. Im daran anschließenden Schritt 140 geht es nun darum, die relevanten Anteile in diesem Spektrum zu identifizieren und zu charakterisieren.

Als **"Peaks"** werden im Folgenden ausgeprägte Erhebungen in den Amplitudenspektren, also in einem Amplituden-Frequenz-Diagramm bezeichnet. Als **"Nadeln"** hingegen werden ausgeprägte Erhebungen in einer parametrischen x-y-Darstellung der beiden Amplitudenspektren von Rot und Infrarot mit der Frequenz als Parameter bezeichnet. Liegt eine gute Korrelation der beiden Zeitsignale vor, sind auch die Spektren ähnlich und die Peaks bilden sich im parametrischen Diagramm als schlanke Nadeln ab. Es sei darauf hingewiesen, daß die Breite der Peaks nichts mit der Breite der Nadeln zu tun hat. Allein der Ähnlichkeit der Form der korrespondierenden Rot- bzw. Infrarot Peaks bestimmt die Schlankheit der Nadeln: Je ähnlicher, desto schmaler.

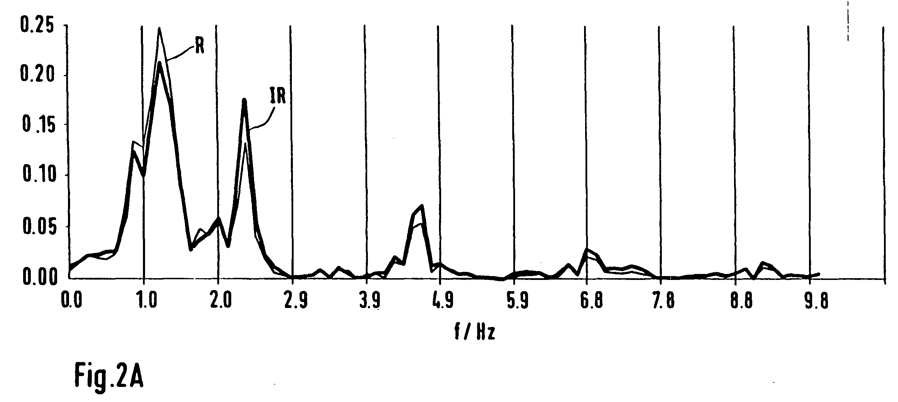

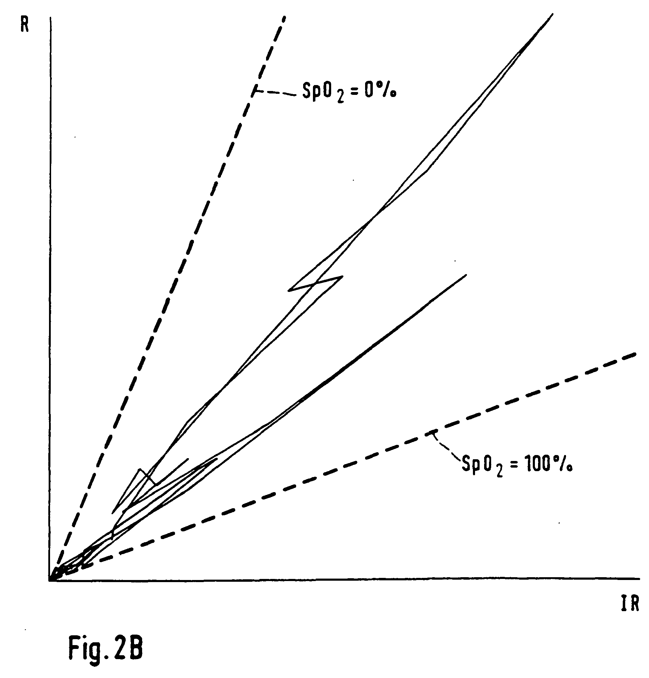

Figur 2A zeigt ein Beispiel eines kräftig gestörten, aber noch beherrschbaren pulsoximetrischen Signals. Die Spektren zeigen eine intensive Störung im Bereich 1 Hz. Die Grundwelle des Nutzsignals wird um ca. 2.5 Hz sichtbar und zeigt darüber hinaus noch drei Harmonische. Figur 2B zeigt dasselbe Spektrum wie in Figur 2A, jedoch als Nadeldiagramm. In diesem Nadeldiagramm erzeugt das Nutzsignal die flachen ineinander geschachtelten Nadeln, während die tieffrequentere Störung amplitudenmäßig herausragt, aber aufgrund der steileren Richtung auf einen niedrigeren $SpO_2$-Wert hindeutet. Die Steigung der Nadeln im Nadeldiagramm entspricht im Prinzip, aufgrund der Linearität der Fourier-Transformation, dem $SpO_2$-Sättigungsverhältnis. Genauere Angaben über die Berechnung des $SpO_2$-Wertes lassen sich insbesondere der bereits angeführten Anmeldung EP-A-870466 (Nadelkissenalgorithmus) entnehmen.

Zur Identifikation der Peaks, bzw. Nadeln wird aus den Rot- und Infrarotspektren ein sogenanntes Abstandsspektrum gebildet, mit:

$$A(\omega) = \sqrt{\hat{S}_R(\omega)^2 + \hat{S}_{IR}(\omega)^2}$$

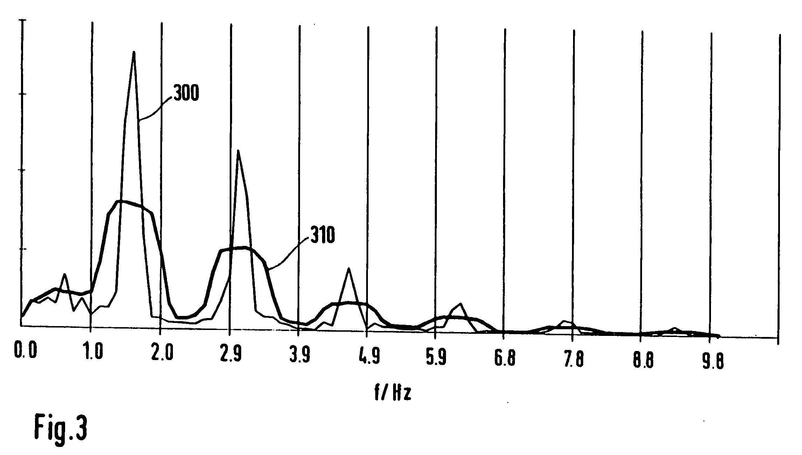

Dieses Spektrum beschreibt die Distanz jedes einzelnen Stützpunktes im Nadeldiagramm vom Ursprung. Figur 3 zeigt ein Beispiel eines Abstandsspektrums 300 für einen relativ ungestörten Standardfall.

Als Randbedingung sollen vorzugsweise bis zu 10 einzelne Nadeln pro Algorithmus-Zyklus identifiziert werden. Von diesen Nadeln beschreiben normalerweise etwa 3 bis 5 die Grundwellen und Oberwellen des Nutzsignals, und der Rest wird durch Störanteile bestimmt. In einer bevorzugten Ausführungsform wird als Verfahren zur Nadelidentifikation folgende Prozedur durchgeführt:

• Bilde durch symmetrische Mittelung des Abstandsspektrums 300 eine Schwellwertfunktion 310.

• Bilde der Differenz des Abstandsspektrums 300 zu der Schwellwertfunktion 310.

• Suche in diesem Differenzspektrum die 10 größten Peaks, angefangen beim Größten.

• Bestimme jeweils die Fußpunkte links und rechts.

Die Schwellwertfunktion 310 hat die Aufgabe breitgezogene Peaks in den Spektren zu unterdrücken, schmalere Erhebungen hervorzuheben und die Empfindlichkeit der Detektion dann herunterzusetzen, falls viele Peaks eng benachbart sind, also wenn zum Beispiel ein Nutzpeak von Störpeaks stark "bedrängt" wird. Die Schwellwertfunktion S(i) bestimmt sich vorzugsweise nach folgender Formel:

$$S(i) = \frac{l}{2k+1} \sum_{i=-k}^{k} A(i)$$

mit den Stützpunkten des Spektrums i. Vorzugsweise wird für eine Filterbreite der Wert k = 3 Frequenzstützstellen und ein Liftfaktor l =1.3 verwendet.

Die Peaks werden vorzugsweise der Größe nach in abfallender Reihenfolge durch Maximalwertsuche identifiziert. Die Suche wird beendet, nachdem entweder 10 Peaks gefunden wurden oder wenn kein Peak mit einer Amplitude von > 2%, bezogen auf den größten Peak, mehr vorhanden ist.

Zur Bestimmung des linken und rechten Fußpunktes werden vorzugsweise als Kriterien für den Abbruch der Fußpunktsuche, startend von der Spitze weg, folgende Kriterien festgelegt:

• Das Abstandsspektrum 300 muß die Schwellwertfunktion 310 mindestens einmal, maximal zweimal unterschritten haben;

• UND die Höhe des nächsten Samples würde einen Wiederanstieg bedeuten;

• ODER der Fußpunkt eines zuvor gefundenen Peaks wird erreicht (gemeinsamer Fußpunkt);

• ODER die untere spektrale Grenze (0 Hz) oder die obere Maximalfrequenz (z.B. 10 Hz) wird erreicht.

Für jede der so identifizierten (bis zu 10) Nadeln wird eine Reihe von Eigenschaften ermittelt, die einer späteren Klassifizierung dienen und die Basis zur Bestimmung der auszugebenden Pulsoximeterwerte bilden. Vorzugsweise sind dies:

• Schwerpunktsfrequenz; gebildet aus der linken und rechten Fußpunktsfrequenz und dem Abstandsspektrum aus den Stützstellen i;

- Perfusionsanteil aus der Höhe der maximalen Rot- und Infrarotamplituden;

- $SpO_2$-Wert aus der Steigung der Nadeln (= Ratio);

- Korrelationskoeffizient der Regressionsgeraden durch die Nadelstützpunkte.

In einer bevorzugten Ausführungsform werden weitere Kriterien dafür herangezogen, ob das Signal einem gewissen Mindestanspruch genügt und ausreichende Merkmale eines Plethysmogramms besitzt. Falls nicht, sollen die erkannten Nadeln vollständig unterdrückt werden, da sonst ein hohes Risiko dafür besteht, daß Störungen versehentlich als Nutzsignal zugelassen werden oder daß eine übermäßige Störungsüberlagerung zu großen Meßfehler führt. Als vorteilhaft haben sich dabei insbesondere folgende Kriterien dargestellt:

- Korrelation der Zeitsignale (Rot und Infrarot)

- zu viele hohe Peaks

- Abfall der Amplitude des Spektrums in Richtung der Oberwellen

- Streuung der Fourier-Koeffizienten

- Flächenanteil der Peaks

- Streuung der $SpO_2$-Werte, die den selektierten Nadeln zugeordnet werden.

Überschreitet vorzugsweise eines dieser 6 Kriterien einen jeweils vorgegebenen Grenzwert, so führt dies vorzugsweise zu einer Ausblendung aller gefundenen Nadeln dieses Zyklus. Das Ausbleiben der Nadeln wird zwar nicht sofort, aber über eine gewisse Zeit, je nach Vorgeschichte, zu einer gewünschten INOP-Anzeige des Pulsoximeters führen.

Mit jedem Taktzyklus (vorzugsweise 1 s) des erfindungsgemäßen Fourier-Nadel-Algorithmus (FNA) werden im Schritt 140 bis zu 10 Nadeln gefunden und charakterisiert. Im anschließenden Schritt 150 erfolgt dann, vorzugsweise mit einer Fuzzy-Logic-Verknüpfung, eine Verkettung der neu gewonnenen Nadeln mit sogenannten Fäden. Fäden bestehen aus aneinandergereihten "passenden" Nadeln aus vorherigen Zyklen, also dem zeitlichen Trend aus der jüngeren Vergangenheit. Zyklus für Zyklus werden die Nadeln, soweit passend, auf vorhandene Fäden aufgereiht, geradeso wie Perlen auf eine Schnur. Findet eine Nadel keinen passenden Faden, so kann diese, unter bestimmten Voraussetzungen, einen neuen Faden beginnen. Vorzugsweise bis zu 10 Fäden werden parallel gehalten und verfolgt.

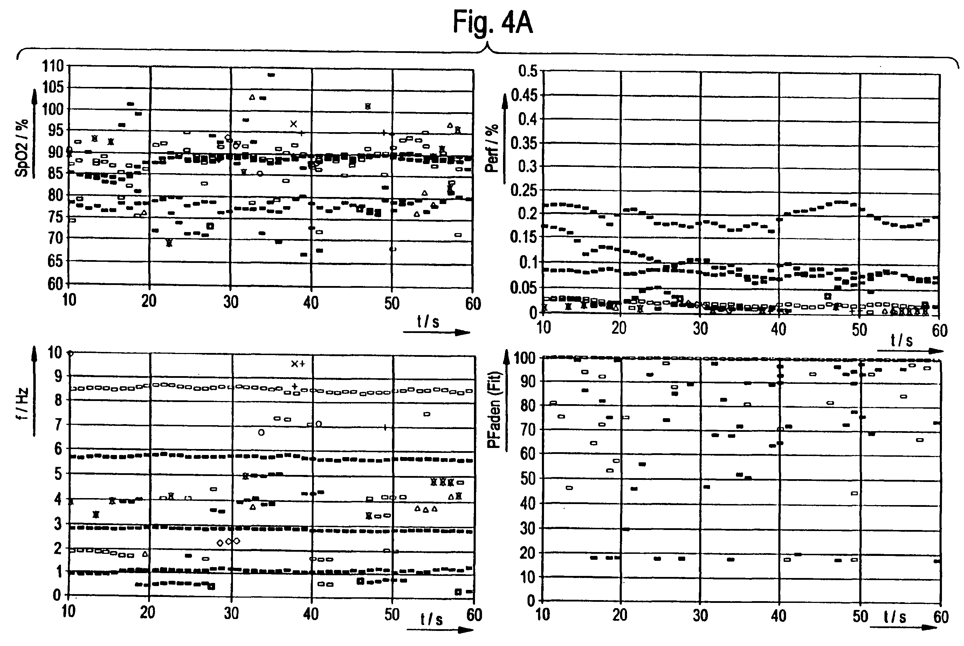

Figur 4A zeigt eine störungsarme Episode, bei der außer einer atmungsinduzierten Nebenlinie im Tieffrequenzenbereich um ca. 1 Hz die dominierenden Fäden vom Nutzsignal herrühren. Das Diagramm links oben stellt dabei den $SpO_2$-Wert in Prozent, das Diagramm links unten die Schwerpunktfrequenz in Hz, das Diagramm rechts oben den Perfusionsanteil in Prozent und das Diagramm rechts unten die Paßgenauigkeit aller Nadeln nach einer Punkte-Bewertungsskala, in der 100 das Maximum darstellt, dar. Akzeptierte Nadeln, die zu Fäden gehören, sind als kleine Balken dargestellt, während verworfene Nadeln durch andere Symbole gekennzeichnet sind..Im Trenddiagramm der Frequenzen (links unten) erkennt man das Nutzsignal bei knapp 3 Hz und Vielfachen davon. Da es sich um ein störungsarmes Signal handelt, erreichen fast alle Nadeln die maximale Paßgenauigkeit (hier: 100 Punkte), was in dem Diagramm rechts unten nicht zu erkennen ist, da die verschiedenen Fäden übereinander gezeichnet sind.

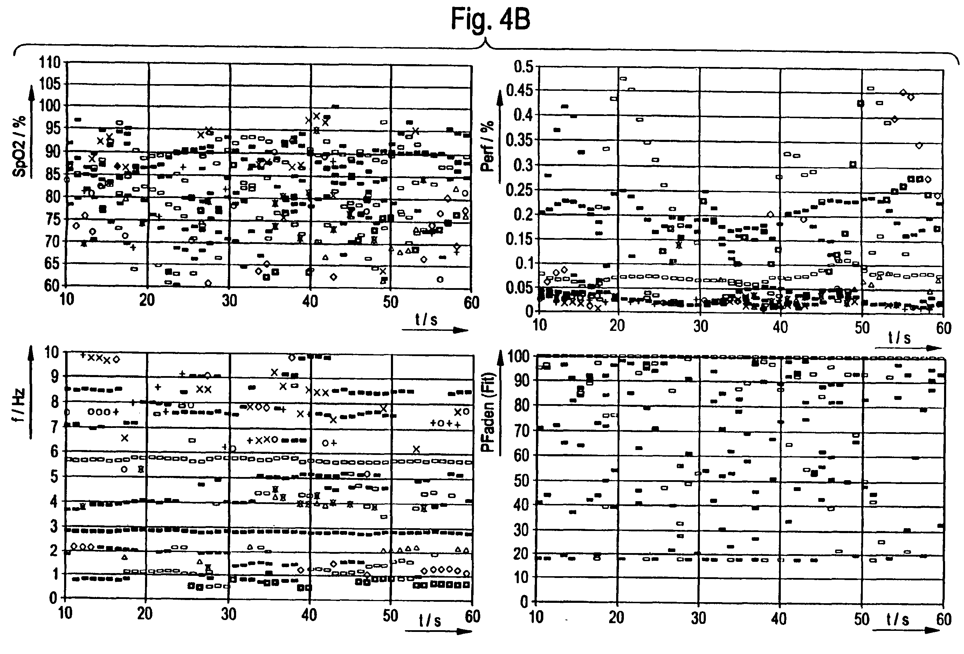

Figur 4B stellt die in Fig. 4A gezeigte Episode nach Hinzufügen einer kräftigen Störung dar. Durch die "Störer" gibt es viele zusätzliche Fäden, welche auch zu weiter gestreuten $SpO_2$-Werten (vergleiche links oben) führen und vermehrt schlechtere Paßgenauigkeiten (vergleiche rechts unten) mit sich bringen. Die Störungen liegen von der Amplitude her teilweise deutlich über dem Nutzsignal (vergleiche rechts oben).

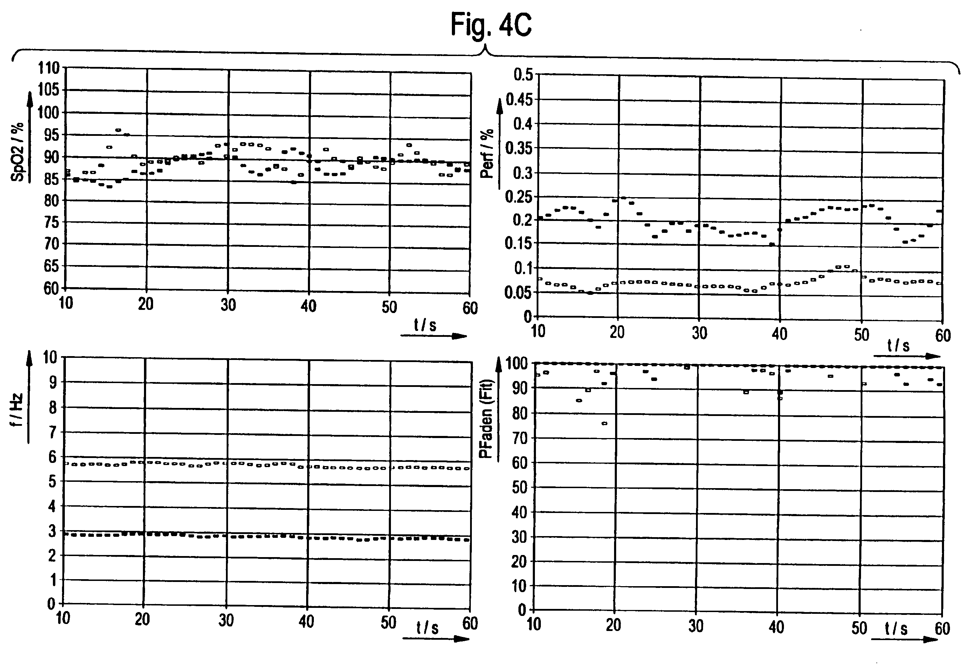

Zwar entstehen durch das Hinzufügen der Störung in Fig. 4B eine ganze Reihe neuer kurzer Fadenstücke, allerdings sind die Hauptfäden noch fast unverfälscht auszumachen, wie dies in Fig. 4C dargestellt ist. Aus diesen selektierten Hauptfäden können dann in einem späteren Algorithmus-Schritt noch verhältnismäßig korrekte Ausgabewerte gewonnen werden.

Die Fadengenerierung gliedert sich vorzugsweise in die Abschnitte:

- Initialisierung: Beginn der Fäden;

- Fortlaufende Angliederung passender Nadeln:

- Beendung von alten" ausgelaufenen Fäden und Ersetzen durch neue Fäden.

Zur Initialisierung wird bei einem Neustart (zum Beispiel bei Einschalten des Gerätes, neu gestecktem Sensor oder einer Aus-Zeit nach einer erfolglosen Signalsuche) der erste erhaltene Satz von Nadeln genommen, um einen Satz Fäden zu begründen. Dazu sind keine weiteren Bedingungen für die Nadeln zu erfüllen.

Für eine Angliederung passender Nadeln wird vorzugsweise eine Nadel als passend angesehen, wenn sich zum letzten Glied im Faden wenig Abweichung bzgl.:

- Schwerpunktsfrequenz

- des $SpO_2$-Wertes

- des Perfusionsanteils (Amplitude des Peaks, Länge der Nadel)

ergeben. Die Kriterien für "passend" werden vorzugsweise mit Hilfe einer Fuzzy-Logic-Verknüpfung definiert. Dazu werden zunächst zwischen jeder Nadel i und jedem Faden k (konkret: der letzten dort angegliederten Nadel) die Abweichungen berechnet. Bei maximal 10 Nadeln und 10 Fäden ergeben sich also maximal 100 Vergleiche. Die Abweichungen der Schwerpunktsfrequenz des $SpO_2$-Wertes und des Perfusionsanteils werden mit Hilfe der Fuzzy-Logic zu einem Paßgenauigkeitswert *(PFaden)* verarbeitet, der auf einer Punkteskala (zum Beispiel 0-100) die Güte der Passung beschreibt, wobei die volle Punktzahl von 100 erreicht wird, wenn Nadel und Faden ideal oder fast ideal übereinstimmen. Um als Nadel in einen Faden aufgenommen zu werden, wird vorzugsweise ein Schwellwert für die Paßgenauigkeit festgelegt.

Oft wird der überwiegende Teil der Fäden durch vorübergehende Störungen belegt. Durch die transiente Natur vieler Bewegungsartefakte kommt es dazu. daß nach kurzer Zeit (etwa einigen Sekunden) für solche Fäden keine neuen Nadeln mehr gefunden werden können. Es ist auch möglich, daß vorübergehend für die "Nutzfäden" die im Prinzip vorhandenen, aber nicht akzeptablen Nadeln ausbleiben, weil sie zu sehr von Störungen überdeckt sind. In diesem Fall bleiben vorzugsweise die entsprechenden Fäden für diesen Zyklus einfach unbesetzt und es entsteht eine Lücke.

Sollte der Faden eines Nutzsignals doch einmal abreißen, wird vorzugsweise eine Möglichkeit geboten, daß neue Fäden entstehen können. Dies kann durch folgenden Prozeß geschehen:

- Identifiziere von den nicht zuordenbaren Nadeln diejenige mit der größten Länge (Perfusionsanteil) als Kandidat um einen Faden zu beginnen.

- Identifiziere einen der 10 Fäden, der neu gestartet werden kann, nach folgender **Prioritätenliste:**

    1. Nimm einen unbelegten Faden, falls noch vorhanden.

    2. Ersetze den Faden mit der größten Lücke, falls dieser größer als 30 s ist.

    3. Ersetze den Faden mit der schlechtesten Qualität.

Sollte der Neustart eines Fadens im momentanen Zyklus unmöglich sein, weil keines der genannten Kriterien erfüllt ist, wird der identifizierte Kandidat verworfen, so wie alle anderen nicht zuordenbaren Nadeln auch.

Nachdem nun bis zu 10 Fäden unterschiedlicher Qualität vorliegen, wird als nächster Schritt in der Verarbeitungskette untersucht, inwieweit bestimmte charakteristische Merkmale zwischen den Fäden existieren, die gemeinsam darauf hindeuten, daß die Fäden zum gleichen plethysmographischen Nutzsignal gehören. Als Gemeinsamkeitsmerkmale zwischen zwei Fäden werden dabei vorzugsweise angewendet:

- eine in etwa harmonische Frequenzbeziehung (1:2, 1:3, 2:3)

- ein in etwa gleicher $SpO_2$-Wert

- ein etwa erwarteter Amplitudenabfall der Oberwellenreihe für ein plethysmographisches Signal

- eine etwa verhältnisgleiche Trendentwicklung der Frequenzen

- eine etwa gleiche Trendentwicklung der $SpO_2$-Werte

- eine etwa verhältnisgleiche Trendentwicklung der Perfusionsanteile.

Für jeden Faden wird zunächst eine Statistik über seine Komponenten, Frequenz, $SpO_2$-Wert, Perfusionsgenauigkeit, "Löcheranteil" durchgeführt, die bis zum Fadenbeginn, höchstens aber vorzugsweise 25 s, in die Vergangenheit eines Fadens zurückreicht (Statistikzeitraum). Hierbei werden für jede Komponente der Mittelwert und eine Regressionsgerade mit entsprechender Steigerung ermittelt.

Jeder der 10 möglichen Fäden wird nun mit jedem anderen Faden zur Bestimmung der Gemeinsamkeitsmerkmale verglichen. Vorzugsweise kann hinsichtlich der harmonischen Frequenzbeziehung die Prüfung auf eine harmonische Beziehung nur bis zur zweiten Oberwelle beschränkt werden, weil die Amplitudenbeiträge weiterer Harmonischer im allgemeinen zu vernachlässigen sind und bei Störungen schnell nutzlos werden. Daraus ergeben sich hier maximal 10 x 9 x 3 = 270 Paarungen.

Mit Hilfe von entsprechenden Parametern, die für jede Paarung ermittelt werden, wird nun, vorzugsweise wieder durch eine Fuzzy-Operation, für alle Paarungen überprüft, wie gut die Gemeinsamkeitsmerkmale erfüllt sind. Vorzugsweise wird als Ausgangsgröße bei dieser Operation ein Punktewert im Bereich 0-100 generiert, wobei 100 Punkte besagt, daß die beiden Fäden ganz sicher harmonisch sind, und bei 0 Punkten ganz sicher davon auszugehen ist, daß die Fäden von unterschiedlichen Signalquellen herrühren, zum Beispiel von zwei unkorrelierten Störungen wie von Nutzsignal und Störung. Die Zwischenwerte zeigen einen Zusammengehörigkeitsgrad an, also wieviel dafür spricht, daß es sich um Harmonische handelt. Die so gewonnene Punktebewertung kann später auch dazu verwendet werden, Harmonische-Familien aufzubauen und deren "Stärke" zu bestimmen.

Nach Bestimmung des Zusammengehörigkeitsgrades wird für jedes Fadenpaar diejenige der drei möglichen Beziehungen (1:2, 1:3, oder 2:3) als gegeben

angesehen, deren Punktwert am größten ist. Vorzugsweise werden unterhalb einer vorgegebenen Schwelle Beziehungen nicht mehr akzeptiert. Nach Prüfung aller Paarungen wird vorzugsweise eine (z.B. vertikale) Beziehungsstruktur aufgebaut, die für jeden Faden anzeigt, zu welchen anderen Fäden ein Verhältnis besteht und in welchem Maße. Im Maximalfall können 6 solcher Zeiger bestehen, nämlich 3:1. 2:1, 3:2, 2:3, 1:2 und 1:3.

Um ein Kriterium für die Selektion von Fäden, deren Inhalte später die Ausgabewerte bestimmen sollen, zu erreichen, wird an dieser Stelle für jeden der Fäden sein "Wert" ermittelt. Dazu werden vorzugsweise 3 Größen herangezogen:

- die durchschnittliche Paßgenauigkeit (PFaden; siehe oben)

- die Zahl der gültigen Nadeln in einem Faden (d.h. die Länge)

- die "Löcherigkeit" eines Fadens.

Das wichtigste Kennzeichen, um einen Wert zuordnen zu können, ist die durchschnittliche Paßgenauigkeit der Nadeln innerhalb eines Fadens und wird vorzugsweise mittels einer Fuzzy Operation für jeden Zyklus errechnet (Vergleiche PFaden in den Figuren 4). Hier drückt sich aus, wie eng sich die Werte bezüglich $SpO_2$, Perfusionsanteil und der Frequenz aneinander reihen. Ein stabiler Zustand führt vorzugsweise zu maximaler Punktzahl.

Als weitere Größe wird die Länge eines Fadens herangezogen. Es ist die Länge des Fadens gemindert um die Zahl eventuell fehlender Nadeln, also unter Berücksichtigung der Lücken. Im optimalen Fall, wenn in jedem Zyklus eine Nadel zugeordnet wurde und wenn der Faden mindestens so alt ist, wie in die Vergangenheit zurückgeschaut wird, wird der Länge des Fadens vorzugsweise ein Wert 1 zugeordnet.

Die Löcherigkeit eines Fadens ergibt sich vorzugsweise als ein Quotient der enthaltenen Samples n zur Gesamtanzahl von Samples von einem vorgegebenen Statistikintervall.

Vorzugsweise durch eine Fuzzy-Operation werden dann die Kriterien Paßgenauigkeit, Zahl der gültigen Nadeln und Löcherigkeit zu einer Punktebewertung 0-100 zusammengefaßt. Ein zusammenhängender Faden mit guter Paßgenauigkeit und ohne Lücken soll dabei einen Wert von 100 Punkten erhalten. Diese Punktzahl beschreibt den Wert eines Fadens.

Als nächsten Schritt in Richtung einer Selektion eines oder mehrerer Fäden sollen nun Familien Harmonischer aufgebaut werden, deren Stärke durch die zuvor gewonnenen Werte der Fäden und deren Zusammengehörigkeitsgrad beschrieben wird.

Eine Familie soll hier aus einem bis drei Fäden, nämlich Grundwelle, erste Oberwelle plus eventuell zweite Oberwelle, bestehen. Die Einbeziehung weiterer Oberwellen hat sich für die Anwendung in der Pulsoximetrie nicht als sinnvoll erwiesen. Die Zuordnung wird entsprechend den oben beschriebenen Kriterien und Beziehungen für die Verkettung von Fäden zu Harmonischen aufgebaut. Die Existenz einer Oberwelle wird an den dort genannten Kriterien festgemacht. Es ist unerheblich, ob eine direkte Beziehung zur Grundwelle gefunden wurde oder aber in Grenzfällen nur eine indirekte. So kann es sein, daß zwar die Beziehung 1:2 fehlt (weil diese zu schlecht ist), die Beziehungen 1:3 und 2:3 die Existenzkriterien aber erfüllen und damit indirekt auf die erste Oberwelle zeigen.

Vorzugsweise sollen bis zu 10 Familien aufgebaut werden, wobei es auch möglich ist, daß unter Umständen ein Faden gleichzeitig verschiedenen Familien angehört. Als Beschränkung für die Gründung einer Familie wird allerdings gefordert, daß die Frequenz der Grundwelle sich innerhalb eines physiologisch sinnvollen Rahmens befinden muß. Als Spezifikationsgrenzen hat sich dabei als günstig gezeigt: 28-310 bpm.

Wiederum vorzugsweise mittels einer Fuzzy Operation wird eine Verknüpfung von Eingangsparametern durchgeführt:

- Existenz von Grundwelle, 1.Oberwelle und 2.Oberwelle

- Wert des Fadens (wie oben beschrieben) von Grundwelle, 1. Oberwelle und 2. Oberwelle

- Beziehungsgüte zwischen Grundwelle und 1. Oberwelle (1:2), Grundwelle zu 2. Oberwelle (1:3), 1. Oberwelle zu 2. Oberwelle (2:3).

Mit Hilfe dieses Regelwerks soll Familien mit vollständigem Oberwellensatz mehr Punkte zugewiesen werden als solchen mit nur einer Oberwelle oder gar keiner. Der Wert des Fadens soll für die Grundwelle stärker bewertet werden als für die Oberwellen. Ferner soll die direkte Beziehung zur Grundwelle stärker eingehen, als die Beziehung der Oberwellen untereinander. Eine volle Punktzahl (vorzugsweise 100) kann erreicht werden, sofern der Oberwellensatz vollständig ist, eine klare harmonische Beziehung vorliegt und das Signal stabil ist (hoher Wert des Fadens). Fehlt die zweite Oberwelle, kann nur ein verminderter Maximalwert (zum Beispiel 86 Punkte) erreicht werden. Fehlt jedoch die erste Oberwelle, kann lediglich ein noch weiter verringerter Maximalwert (zum Beispiel 67 Punkte) erreicht werden. Besteht die Familie gar nur aus einem Faden, der Grundwelle, ist die Begrenzung nach oben auf einem noch tiefer liegenden Maximalwert gegeben (zum Beispiel 31 Punkte).

Mit der somit erhaltenen Bestimmung einer Familienstärke wird ein sehr gutes Kriterium an die Hand gegeben, um zu entscheiden, welche Familie von Fäden als Nutzsignal interpretiert werden kann. Häufig ist nämlich das Nutzsignal auch am stärksten im Sinne einer maximalen Stärke und damit Punktzahl. In kritischen Fällen reicht dieser Parameter allerdings nicht immer aus um eine korrekte Entscheidung zu treffen. Darum werden vorzugsweise weitere Größen herangezogen. Als potentielle Kandidaten für eine Auswahl werden zunächst alle Familien herangezogen, deren Punktewert der Stärke eine Mindestanforderung (zum Beispiel 30 Punkte) erfüllt. Damit eine Familie zur Ausgabe oder zur Ableitung von Ausgabewerten herangezogen werden soll, muß sie tendenziell folgende Forderungen in einem Relativvergleich unter den Kandidaten erfüllen:

- hohe Punktzahl bei der ermittelten Stärke der Familie

- hoher $SpO_2$-Wert, zum Beispiel Mittelwert der Grundwelle

- eine eher niedrigere Pulsrate

- eine hohe Perfusion.

Die Verbindung dieser Kriterien soll vorzugsweise wieder mittels einer Fuzzy Operation durchgeführt werden. Als Ergebnis dieser Verknüpfung soll wiederum eine Punktebewertung stehen, vorzugsweise in einem Wertebereich von 0-100, wobei die

Familie mit der höchsten Punktzahl zur Ausgabe vorgesehen wird.

In Artefaktsituationen kommt es oft vor, daß die Grundwelle des Nutzsignals verhältnismäßig stark mit Störungen überlagert ist, während die Oberwellen weniger gestört sind. Dann kann es passieren, daß die korrekte Familie des Nutzsignals aufgrund einer geringen Punkteverteilung insgesamt nur eine geringere Punktverteilung erhält und damit gegenüber einer Familie die auf einer Oberwelle basiert nicht zur Ausgabe herangezogen werden würde. Deshalb wird vorzugsweise vor einer Ausgabe noch geprüft, ob die aufgrund der höchsten Punktverteilung gewählten Familie eventuell noch Subharmonische besitzt, also eigentlich auf einer Oberwelle aufbaut. Existiert eine solche Subharmonische und hat die Familie der Subharmonischen eine ausreichende Stärke (vorzugsweise mindestens 0.3 mal die Stärke der ausgewählten Oberwelle), dann wird die Subharmonische anstatt der ausgewählten Oberwelle zur Ausgabe gewählt. Bei mehreren zur Auswahl stehenden Subharmonischen wird die mit der größeren Stärke gewählt.

Auf die oben angeführte Weise ist nun eine Familie von Fäden ausgewählt worden, die die höchste Wahrscheinlichkeit besitzt, daß sie das Nutzsignal repräsentiert.

In einer bevorzugten Ausführungsform findet vor einer Ausgabe noch ein Vergleich der auszugebenden Familie mit Vorgängerwerten statt. In transienten Situationen ist es durchaus möglich, daß konkurrierende Familien, die zum Beispiel auf rhythmischen Störungen basieren, vorübergehend dominant werden und höchste Punktzahlen erreichen. Dieses Problem kann mit einem Erwartungswert-Vergleich erkannt und unterdrückt werden. Als Erwartungswerte gelten vorzugsweise die letzten Werte, die als Anzeigewerte des Pulsoximeters ausgegeben wurden, wie zum Beispiel $SpO_2$-Wert, Pulsrate und Perfusion. Vorzugsweise ebenfalls mittels einer Fuzzy Operation werden die Differenzen zwischen den aktuellen Werten des Grundwellenfadens der ausgewählten Familie (die letzte eingegliederte Nadel) und den Erwartungswerten gebildet. Die Abweichungen von den Erwartungswerten werden einer weiteren Verknüpfung unterworfen, vorzugsweise wiederum durch eine Fuzzy Operation, und sollten dort einen Faktor generieren, der eine Aussage über das Passen zum letzten Ausgabewert trifft. Führt der Vergleich zu einem Ergebnis mit dem Wert der Passung größer als ein vorgegebener Schnellwert, wird dieses Sample des Grundwellenfadens und somit die ganze Familie als passend akzeptiert und der Ausgabe zugeleitet. Andernfalls wird die zunächst vorgesehene Familie wieder verworfen und kann nicht für die Aktualisierung der Ausgabe herangezogen werden.

Bei einem Neustart muß der Vergleich der auszugebenden Familie mit Vorgängerwerten unterbunden werden, und die Ausgabeunterdrückung bleibt ausgeschaltet, solange bis ein erster Vergleichswert vorliegt. Als Sicherheitsmaßnahme gegen ein "Aufhängen" an alten Vergleichswerten wird, vorzugsweise für Fälle, in denen unübliche, unerwartet große Abweichungen auftreten und denen der Algorithmus nicht folgen würde, ein Rückholmechanismus eingebaut.

Stand eine Familie länger als ein vorgegebener Zeitraum (vorzugsweise 4 s) ununterbrochen zur Ausgabe an und wurde aber jedesmal unterdrückt, dann wird diese Familie dennoch ausgegeben, falls ihre Stärke einen bestimmten Wert (vorzugsweise > 35 Punkte) überschreitet.

Beim nächsten Zyklus kann dann mit diesen Werten als neuen Vergleichswerten weitergearbeitet werden. Diese Maßnahme gewährleistet, daß sich der Algorithmus zum Beispiel nach "Entgleisungen" durch massive temporäre Störungen schnell regenerieren kann, sobald das Signal wieder brauchbar ist.

Mit den bisher beschriebenen Verfahren werden die Nadeln zu Fäden vernetzt, die Fäden zu Familien zusammengestellt, und es wird eine dieser Familien schließlich als "Gewinner" ausgewählt. Die verschiedenen Komponenten dieser Familien werden nun zur Ermittlung der Pulsoximeter-Anzeigewerte herangezogen. Angezeigt werden sollen vorzugsweise:

- Sauerstoffsättigung ($SpO_2$)

- Pulsrate (PR)

- Perfusionsindex (Perf)

- Meßbereitschaft -/Zustandsanzeige (INOP)

- Signalqualitätsindikator (QI).

Eine Familie besteht grundsätzlich aus einer Grundwelle zuzüglich erster und zweiter Oberwelle, soweit ableitbar. Im Regelfall sind Oberwellen vorhanden und enthalten im ungestörten Fall die gleiche Information über $SpO_2$ und PR wie die Grundwelle. Sie stellen damit eine redundante Datenquelle dar. Weil die Grundwelle stets deutlich stärker wird als die Oberwellen, wird sie in aller Regel die bessere Information liefern, sobald Störungen ins Spiel kommen. Es gibt jedoch zahlreiche Situationen, in denen die Oberwellen der Familien deutlich weniger stark betroffen sind (zum Beispiel bei Neugeborenen). Der Perfusionsindex liegt bei Neugeborenen typischerweise bei 0.5% (Meßort Fuß/Hand), dagegen werden bei Erwachsenen Werte um 2 % (Meßort Finger) gefunden. Allerdings ist bei Neugeborenen die Pulsfrequenz hoch (typischer Bereich: 130...200 bpm), die Bewegungsstörungen sind aber meist niederfrequent. Das hat zur Folge, daß der Störabstand bei den Oberwellen dennoch geringer sein kann als bei der Grundwelle.

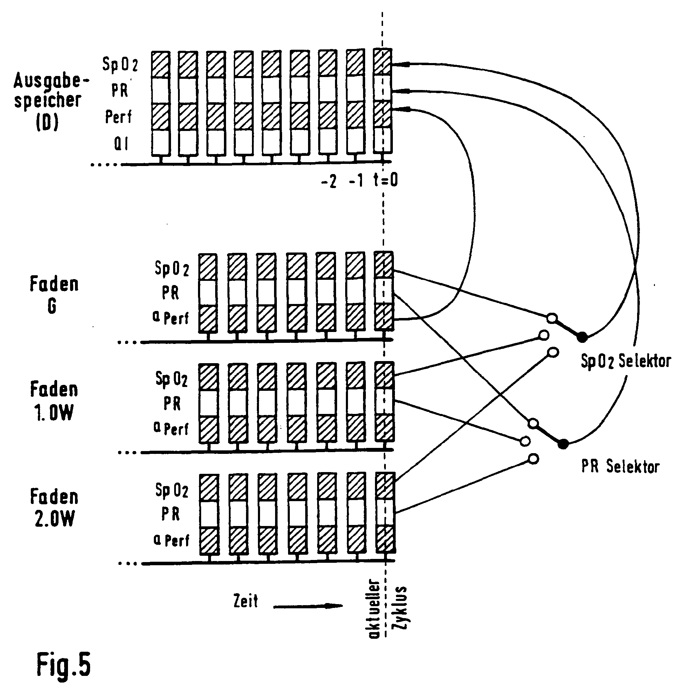

Um zur Ausgabe zu gelangen, werden die aktuellen Werte der selektierten Familie vorzugsweise in einen Ausgangsspeicher gefüllt, der die jüngere Vergangenheit speichert. Aus diesem werden schließlich per Statistik die Anzeigewerte ermittelt. Mit aktuellen Werten sind in diesem Zusammenhang die Enden der Fäden, also die im momentanen Zyklus angereihten Nadeln, gemeint. Figur 5 zeigt eine schematische Darstellung einer Ausgabespeicherbefüllung durch Nutzung der Oberwellen. Die Ausgabewerte für $SpO_2$ und PR können wahlweise von Grund- oder Oberwellen der selektierten Familie bezogen werden. Beim Perfusionsindex sei die Zuordnung fest in der Grundwelle. Welcher der drei Fäden in der Familie für die Anzeige herangezogen werden soll, hängt davon ab, wie gut dessen Werte zum letzten Anzeigewert passen. Dazu werden für jedes Familienmitglied die Differenzen des $SpO_2$-Wertes und des PR-Wertes zwischen Grund- und Oberwellen gebildet, insofern diese existieren. Über eine Minimum-Funktion, angelegt auf die ermittelten Differenzen, wird dann bestimmt, welche Komponente in den Ausgabespeicher D kommt. Dieses Verfahren geht davon aus, daß sich $SpO_2$-Wert und Pulsrate von Zyklus zu Zyklus eher wenig ändern, und es werden daher solche Familienkomponenten bevorzugt, die möglichst nahe an den alten Werten liegen. Dies ist besonders wirkungsvoll, wenn Störungen zu starken Fluktuationen der verschiedenen Nadeln führen und trägt zur Glättung des Signals bei. Ein weiterer wichtiger Beitrag ist, daß bei momentan fehlender Grundwellen-Nadel (was bei massiven Störungen der Fall sein kann) dennoch die Ausgabe durch die Oberwellen aufgefrischt werden kann. Geringe Nachteile kauft man jedoch ein, wenn bei Störungen gleichzeitig ein Gradient des $SpO_2$-Trends oder des Pulsratentrends auftritt. Dann nämlich bewirkt die Tendenz zum alten Wert, daß eher die naheliegenden "Ausreißer" aufgenommen werden, anstatt die wegdriftenden korrekten Werte.

Für den Perfusionsindex funktioniert diese Umschaltemöglichkeit zwischen den Harmonischen nicht, weil vom Perfusionsanteil einer Oberwelle nicht auf den Anteil der Grundwelle oder die anderen Oberwellen geschlossen werden kann. Deshalb wird stets der Perfusionsanteil der Grundwelle eingesetzt. Fällt die Grundwelle wegen übermäßiger Störungen aus, wird vorzugsweise auf den Vorgängerwert zurückgegriffen.

Da für eine kontinuierliche Aktualisierung der abgeleiteten Werte bei einem Pulsoximeter in der Regel kein Anlaß besteht, können die Werte daher vor der Ausgabe über einen gewissen Zeitraum gefiltert werden. Eine solche Filterfunktion hat neben der Glättung irrelevanter physiologischer Variationen vor allem bei störungsbedingten Fluktuationen einen hohen Stellenwert. In dem dargestellten Algorithmus fallen die ungefilterten Ausgabewerte mit einer Zykluszeit von einer Sekunde an und werden dann vorzugsweise in den Ausgabespeicher (vorzugsweise mit einer maximalen Tiefe von 70 s) gefüllt. Als Filter wird vorzugsweise ein "Trimmed Mean Filter" verwendet, das die Funktion von Medianfilter und Mittelwertbildner vereint: Die zu filternden n Werte werden nach der Größe sortiert, und die k größten und k kleinsten Werte werden verworfen (2 k < n; k, n ganzzahlig). Die verbleibenden Werte werden arithmetisch gemittelt. Dieser Filter erlaubt eine gute Glättung, eine rasche Sprungantwort, geringe Verzögerungen, kein nennenswertes Überschwingen, nur ein geringer Einfluß von extremen "Ausreißern" und einen stetigen Verlauf bei stetigen Änderungen.

Da es in manchen Zyklen keine Nadeln gibt mit denen der Ausgabespeicher beschickt werden kann und auch beim Einlaufverhalten nach einem Neustart noch keine oder nur wenige Vergangenheitswerte vorliegen, werden vorzugsweise folgende Anweisungen durchgeführt:

- Gehe mindestens soweit im Ausgabespeicher zurück, bis 5 gültige Samples vorhanden sind. Die Begrenzung in die Vergangenheit sind 70 s; in der Einlaufphase bis maximal zum Startzeitpunkt (Initialisierung des Filters).

- Gehe bis maximal 13 s in die Vergangenheit, wenn schon vorher 5 gültige Samples erfaßt wurden.

- Gib den Trimmed Mean der erfaßten gültigen Werte aus mit k/n=0.25.

Im Normalfall, wenn alle Samples gültig sind, erhält man eine Filterung, je nach vorgegebenem Zeitfenster, über die letzten Sekunden (hier zum Beispiel 13 s). Falls starke Störungen auftreten und Meßwerte ausbleiben (was zu Lücken im Ausgabespeicher führt), wird der Zeitraum soweit in die Vergangenheit verlängert, bis eine Mindestzahl von vorzugsweise 5 Werten erreicht wird. Dieses kann im Extremfall (nach der Einlaufphase) bedeuten, daß bis zu 70 s zurückgegangen wird. Sind bis dann noch keine 5 Samples erfaßt worden, wird an dieser Stelle abgebrochen und mit den bis dahin erfaßten Werten der Trimmed Mean gerechnet. Kommt es zu einem Totalausfall der Meßwerte und kann kein gültiger Wert bis zurück zum Startzeitpunkt gefunden werden, wird der alte Ausgabewert beibehalten. Dieses "Klemmverhalten" kann jedoch nur eine gewisse Zeit toleriert werden.

Der erfindungsgemäße Pulsoximeter gibt vorzugsweise Auskunft über den Zustand der Signalerfassung, wenn der ordnungsgemäße Betrieb nicht möglich ist. Derartige Zustände werden gewöhnlicherweise als "INOP" (englisch für inoperative) bezeichnet. Eine Unterbrechung des Werteflußes in den Ausgabespeicher wird vorzugsweise für einen gewissen Zeitraum (zum Beispiel die ersten 10 s) toleriert, und es erfolgt keine Meldung. Die Ausgabewerte werden vorzugsweise entsprechend dem oben dargestellten Filteralgorithmus so lange wie möglich aufgefrischt und danach "geklemmt". Erst nach Überschreiten der Lücke im Ausgabespeicher über den vorgeschriebenen Zeitpunkt hinaus soll dann eine INOP-Zustandsanzeige in Kraft treten.

## Patentansprüche

1. Verfahren zur Erkennung eines Nutzsignals in einem physikalischen Meßsignal, mit den Schritten:

   (a) Transformation (120) des Meßsignals, für ein gegebenes Zeitfenster, in den Frequenzbereich, vorzugsweise durch eine Fourier-Transformation,

   (b) Identifikation (140) von Frequenzpeaks in dem transformierten Meßsignal,

   (c) Zuordnung (150) identifizierter Frequenzpeaks zu zeitlichen Verläufen identifizierter Frequenzpeaks eines oder mehrerer vorangegangener Zeitfenster, insofern identifizierte Frequenzpeaks bereits vorliegen,

   (d) Zuordnung (150) der zeitlichen Verläufe zu einer oder mehreren Familien, die jeweils aus einer Grundwelle und/oder einer oder mehreren Oberwellen dazu bestehen, wobei die Zuordnung (150) erfolgt durch Untersuchung, inwieweit bestimmte charakteristische Merkmale zwischen den Verläufen existieren, die gemeinsam darauf hindeuten, daß die Verläufe zum gleichen Nutzsignal gehören,

   (e) Auswahl (150) einer Familie als diejenige, die das Nutzsignal repräsentieren soll, und

   (f) Auswahl (150) eines Frequenzpeaks des aktuellen Zeitfensters aus der ausgewählten Familie als derjenige, der den Meßwert des Nutzsignals in diesem Zeitfenster repräsentieren soll.

2. Das Verfahren nach Anspruch 1, worin in Schritt (c) die Zuordnung (150) erfolgt durch :

   (c1) Initialisierung, vorzugsweise bei einem Neustart, wobei der erste erhaltene Satz von Frequenzpeaks genommen wird, um einen Satz von Verläufen zu gründen,

   (c2) fortlaufende Angliederung passender Frequenzpeaks, wobei ein Frequenzpeak als passend angesehen wird, wenn sich zum letzten Glied im Verlauf nur geringe Abweichungen bezüglich vorgegebener Kriterien ergeben, und wobei vorzugsweise, falls einem vorhandenen kein neuer Frequenzpeak zugeordnet werden kann, eine Lücke bleibt und der Verlauf entweder beendet oder durch einen neuen Verlauf ersetzt wird, sofern die Lücke zu lang wird.

3. Das Verfahren nach Anspruch 1 oder 2, worin in Schritt (d) die Untersuchung erfolgt durch :

   Verknüpfung geeigneter Kriterien wie harmonische Frequenzbeziehung, erwarteter Amplitudenabfall der Oberwellenreihe und/oder verhältnisgleiche Trendentwicklung der Frequenzen und/oder Amplituden, vorzugsweise durch eine unscharfe Logik wie die Fuzzy Logic.

4. Das Verfahren nach einem der vorangegangenen Ansprüche, worin in Schritt (e) die Auswahl (150) erfolgt im Sinne einer höchsten Wahrscheinlichkeit für das Repräsentieren des Nutzsignals durch die ausgewählte Familie.

5. Das Verfahren nach einem der vorangegangenen Ansprüche, worin in Schritt (e) die Auswahl (150) erfolgt durch Verknüpfung vorgegebener Kriterien, vorzugsweise Existenz von Grundwelle und/oder Oberwelle(n), durchschnittliche Paßgenauigkeit der Verläufe, Anzahl der gültigen Frequenzpeaks in einem Verlauf, Stetigkeit eines Verlaufs und/oder Beziehungsgüte zwischen Grundwelle und Oberwelle(n), vorzugsweise durch eine unscharfe Logik wie die Fuzzy-Logic.

6. Das Verfahren nach einem der vorangegangenen Ansprüche, worin in Schritt (e) die Auswahl (150) erfolgt durch eine Plausibilitätsüberprüfung der Familie gegenüber vorangegangenen Ausgabewerten, wobei die plausibelste Familie ausgewählt wird.

7. Das Verfahren nach einem der vorangegangenen Ansprüche, worin in Schritt (f) der aktuelle Meßwert des Nutzsignals aus dem ausgewählten Frequenzpeak ermittelt wird.

8. Das Verfahren nach einem der vorangegangenen Ansprüche, worin in Schritt (f) die Auswahl (150) im Sinne einer höchsten Wahrscheinlichkeit für das Repräsentieren des Meßwerts des Nutzsignals durch den ausgewählten Frequenzpeak erfolgt, vorzugs-

weise durch Verknüpfung vorgegebener Kriterien-mittels einer unscharfen Logik wie der Fuzzy-Logic, wobei als Kriterien dabei vorzugsweise solche Kriterien angewandt werden, die auf eine Plausibilität des aktuellen Meßwertes gegenüber vorangegangenen Meßwerten und/oder gegenüber erwarteten oder sinnvollen Werten abgestellt sind.

9. Das Verfahren nach einem der vorangegangenen Ansprüche, worin nach Schritt (f) eine Plausibilitätsüberprüfung durchgeführt wird, um zu überprüfen, ob der ausgewählte Frequenzpeak auch tatsächlich einem erwarteten Meßwert des Nutzsignals entspricht und/oder ob ein von dem ausgewählten Frequenzpeak abgeleiteter Meßwert zu einer Ausgabegelangen soll und/oder ob für dieses Zeitfenster überhaupt kein Meßwert ausgegeben werden soll, vorzugsweise durch einen Vergleich des aktuellen Meßwertes mit vorangegangenen Meßwerten und/oder mit erwarteten oder sinnvollen Werten.

10. Das Verfahren nach einem der vorangegangenen Ansprüche zur Nutzsignalfilterung medizinischer Messsignale, vorzugsweise in der Pulsoximetrie, der Blutdruckmessung oder der Herzfrequenzbestimmung.

11. Ein Computerprogramm-Produkt gespeichert auf einem computerlesbaren Speichermedium, aufweisend einen Code zur Ausführung der Schritte nach einem der vorangegangenen Ansprüche 1-10, wenn das Programm auf einem Computer ausgeführt wird.

12. Vorrichtung zur Erkennung eines Nutzsignals in einem physikalischen Meßsignal, aufweisend:

Mittel zur Transformation (120) des Meßsignals, für ein gegebenes Zeitfenster, in den Frequenzbereich, vorzugsweise durch eine Fourier-Transformation,
Mittel zur Identifikation (140) von Frequenzpeak in dem transformierten Meßsignal,
Mittel zur Zuordnung (150) identifizierter Frequenzpeaks zu zeitlichen Verläufen identifizierter Frequenzpeaks eines oder mehrerer vorangegangener Zeitfenster, insofern identifizierte Frequenzpeaks bereits vorliegen,
Mittel zur Zuordnung (150) der zeitlichen Verläufe zu einer oder mehreren Familien, die jeweils aus einer Grundwelle und/oder einer oder mehreren Oberwellen dazu bestehen, wobei die Zuordnung (150) erfolgt durch Untersuchung, inwieweit bestimmte charakteristische Merkmale zwischen den Verläufen existieren, die gemeinsam darauf hindeuten, daß die Verläufe zum gleichen Nutzsignal gehören,
Mittel zur Auswahl (150) einer Familie als diejenige, die das Nutzsignal repräsentieren soll, und

Mittel zur Auswahl (150) eines Frequenzpeaks des aktuellen Zeitfensters aus der ausgewählten Familie als derjenige, der den Meßwert des Nutzsignals in diesem Zeitfenster repräsentieren soll.

## Claims

1. Method for identifying a useful signal in a physical measurement signal, comprising the steps of:

(a) transformation (120) of the measurement signal, for a given time window in the frequency range, preferably by a Fourier transform,
(b) identification (140) of frequency peaks in the transformed measurement signal,
(c) assignment (150) of identified frequency peaks to time curves of identified frequency peaks of one or more previous time windows, insofar as identified frequency peaks are present,
(d) assignment (150) of time curves to one or more families, each consisting of a fundamental wave and/or one or more harmonics, wherein the assignment (150) is carried out by examination of the extent to which certain characteristic features exist between the curves, which together indicate that the curves belong to the same useful signal,
(e) selection (150) of a family as that which will represent the useful signal, and
(f) selection (150) of a frequency peak of the current time window from the selected family as the one that will represent the measured value of the useful signal in this time window.

2. Method of claim 1, wherein in step (c) the assignment (150) is performed by:

(c1) initialization, preferably, after a restart, wherein the first obtained set of frequency peaks is taken to establish a set of curves,
(c2) ongoing incorporation of appropriate frequency peaks, wherein a frequency peak is considered to be suitable when as the last member in the process only slight deviations with respect to predefined criteria exist, and wherein preferably, if an existing not new frequency peak can be assigned, a gap remains and the curve is neither completed nor replaced by a new curve, if the gap becomes too long.

3. Method of claim 1 or 2, wherein in step (d) the examination is performed by:

Combining suitable criteria such as harmonic frequency relationship, expected amplitude drop of the harmonic series and/or proportional trend development of the frequencies and/or amplitudes, preferably by a fuzzy logic such as Fuzzy Logic.

4. Method according to any one of the preceding claims, wherein in step (e) selection (150) is made in terms of a highest probability of representing the useful signal by means of the selected family.

5. Method according to any one of the preceding claims, wherein in step (e) selection (150) is made by combining predetermined criteria, preferably the existence of a fundamental wave and/or harmonic(s), the average accuracy of curve fit, the number of valid frequency peaks in a process, continuity of a curve and/or relationship quality between fundamental and harmonic(s), preferably by means of a fuzzy logic such as Fuzzy Logic.

6. Method according to any of the preceding claims, wherein in step (e) selection (150) is made by a plausibility examination of the family with respect to previous output values, wherein the most plausible family is selected.

7. Method according to any one of the preceding claims, wherein in step (f) the current measured value of the useful signal is determined from the selected frequency peak.

8. Method according to any one of the preceding claims, wherein in step (f), the selection (150) is made in terms of a highest probability of representing the measured value of the useful signal by the selected frequency peak, preferably through a combination of predetermined criteria by means of a fuzzy logic such as Fuzzy Logic, wherein as criteria in this regard preferably such criteria are used, which are adjusted as regards a plausibility of the current measured value compared to previous measured values and/or compared to expected or meaningful values.

9. Method according to any one of the preceding claims, wherein in step (f) a plausibility check is carried out in order to verify whether the selected frequency peak actually also corresponds to an expected measured value of the useful signal and/or whether a measured value derived from the selected frequency peak is to arrive at an output and/or whether for this time window no measured value is to be output, preferably by comparing the current measured value with previous measured values and/or with expected or meaningful values.

10. Method according to one of the preceding claims for useful signal filtration of medical measurement signals, preferably in pulse oximetry, blood pressure measurement or heart rate determination.

11. Computer program product stored on a computer-readable storage medium, comprising a code for performing the steps according to any one of the preceding claims 1-10, when the program is run on a computer.

12. Apparatus for detecting a useful signal in a physical measurement signal, comprising:

means for the transformation (120) of the measurement signal, for a given time window in the frequency range, preferably by a Fourier transform,
means for the identification (140) of frequency peaks in the transformed measurement signal,
means for the assignment (150) of identified frequency peaks to time curves of identified frequency peaks of one or more previous time windows, insofar as identified frequency peaks are already present,
means for the assignment (150) of time curves to one or more families, each consisting of a fundamental wave and/or one or more harmonics, wherein the assignment (150) is carried out by examining the extent to which certain characteristic features exist between the curves, which together indicate that the curves belong to the same useful signal,
means for the selection (150) of a family as that which will represent the useful signal, and
means for the selection (150) of a frequency peak of the current time window from the selected family as the one that will represent the measured value of the useful signal in this time window.

**Revendications**

1. Procédé de reconnaissance d'un signal utile dans un signal de mesure physique, avec les étapes de :

(a) transformation (120) du signal de mesure, pour une fenêtre de temps donnée, dans la plage de fréquence, de préférence par une transformée de Fourier,
(b) identification (140) de pics de fréquence dans le signal de mesure transformé,
(c) affectation (150) de pics de fréquence identifiés à des déroulements temporels de pics de fréquence identifiés d'une ou plusieurs fenêtres de temps précédentes, dans la mesure où des pics de fréquence identifiés existent déjà,
(d) affectation (150) des déroulements temporels à une ou plusieurs familles, qui se composent respectivement d'une onde fondamentale et/ou d'un ou plusieurs harmoniques, dans lequel l'affectation (150) se fait en examinant dans quelle mesure certaines spécificités caractéristiques entre les déroulements existent, qui indiquent ensemble que les déroulements appartiennent au même signal utile,

(e) sélection (150) d'une famille comme étant celle, qui doit représenter le signal utile, et

(f) sélection (150) d'un pic de fréquence de la fenêtre de temps actuelle parmi la famille sélectionnée comme étant celui, qui doit représenter la valeur de mesure du signal utile dans cette fenêtre de temps.

**2.** Procédé selon la revendication 1, dans lequel dans l'étape (c) l'affectation (150) se fait par :

(c1) initialisation, de préférence lors d'un redémarrage, dans lequel le premier jeu de pics de fréquence obtenu est pris pour constituer un jeu de déroulements,

(c2) rattachement continu de pics de fréquence appropriés, dans lequel un pic de fréquence est considéré comme approprié, lorsque l'on n'obtient que de faibles écarts par rapport à des critères prédéfinis pour le dernier élément dans le déroulement et dans lequel de préférence, si aucun nouveau pic de fréquence ne peut être affecté à un pic de fréquence existant, il reste une lacune et le déroulement est soit terminé soit remplacé par un nouveau déroulement, dans la mesure où la lacune devient trop longue.

**3.** Procédé selon la revendication 1 ou 2, dans lequel dans l'étape (d) l'examen se fait par :

combinaison de critères adaptés comme la relation de fréquence harmonique, la chute d'amplitude attendue de la série d'harmoniques et/ou l'évolution de tendance proportionnelle des fréquences et/ou amplitudes, de préférence par une logique floue comme la fuzzy logic.

**4.** Procédé selon l'une quelconque des revendications précédentes, dans lequel dans l'étape (e) la sélection (150) se fait dans le sens d'une probabilité la plus grande pour la représentation du signal utile par la famille sélectionnée.

**5.** Procédé selon l'une quelconque des revendications précédentes, dans lequel dans l'étape (e) la sélection (150) se fait par la combinaison de critères prédéfinis, de préférence l'existence d'une onde fondamentale et/ou d'un harmonique(s), la précision moyenne des déroulements, le nombre de pics de fréquence valables dans un déroulement, la continuité d'un déroulement et/ou la qualité du rapport entre onde fondamentale et harmonique(s), de préférence par une logique floue comme la fuzzy logic.

**6.** Procédé selon l'une quelconque des revendications précédentes, dans lequel dans l'étape (e) la sélection (150) se fait par un contrôle de plausibilité de la famille par rapport à des valeurs de sortie précédentes, dans lequel la famille la plus plausible est sélectionnée.

**7.** Procédé selon l'une quelconque des revendications précédentes, dans lequel dans l'étape (f) la valeur de mesure actuelle du signal utile est déterminée à partir du pic de fréquence sélectionné.

**8.** Procédé selon l'une quelconque des revendications précédentes, dans lequel dans l'étape (f) la sélection (150) se fait dans le sens d'une probabilité la plus grande pour la représentation de la valeur de mesure du signal utile par le pic de fréquence sélectionné, de préférence par combinaison de critères prédéfinis au moyen d'une logique floue comme la fuzzy logic, dans lequel sont appliqués ce faisant comme critères de préférence les critères qui reposent sur une plausibilité de la valeur de mesure actuelle par rapport à des valeurs de mesure précédentes et/ou par rapport à des valeurs attendues ou pertinentes.

**9.** Procédé selon l'une quelconque des revendications précédentes, dans lequel après l'étape (f) un contrôle de plausibilité est effectué pour vérifier si le pic de fréquence sélectionné correspond effectivement à une valeur de mesure attendue du signal utile et/ou si une valeur de mesure dérivée du pic de fréquence sélectionné doit parvenir à une sortie et/ou si pour cette fenêtre de temps aucune valeur de mesure ne doit être sortie, de préférence par une comparaison de la valeur de mesure actuelle avec des valeurs précédentes et/ou avec des valeurs attendues ou pertinentes.

**10.** Procédé selon l'une quelconque des revendications précédentes pour le filtrage du signal utile de signaux de mesure médicaux, de préférence dans la pulsoxymétrie, la mesure de la tension artérielle ou la détermination de la fréquence cardiaque.

**11.** Produit de programme informatique enregistré sur un support de stockage lisible par ordinateur, présentant un code pour la réalisation des étapes selon l'une quelconque des revendications 1-10, lorsque le programme est exécuté sur un ordinateur.

**12.** Dispositif de reconnaissance d'un signal utile dans un signal de mesure physique, présentant :

un moyen de transformation (120) du signal de mesure, pour une fenêtre de temps donnée,

dans la plage de fréquence, de préférence par une transformée de Fourier,

un moyen d'identification (140) de pics de fréquence dans le signal de mesure transformé,

un moyen d'affectation (150) de pics de fréquence identifiés à des déroulements temporels de pics de fréquence identifiés d'une ou plusieurs fenêtres de temps précédentes, dans la mesure où des pics de fréquence identifiés existent déjà,

un moyen d'affectation (150) des déroulements temporels à une ou plusieurs familles, qui se composent respectivement d'une onde fondamentale et/ou d'un ou plusieurs harmoniques, dans lequel l'affectation (150) se fait en examinant dans quelle mesure certaines spécificités caractéristiques entre les déroulements existent, qui indiquent ensemble que les déroulements appartiennent au même signal utile,

un moyen de sélection (150) d'une famille comme étant celle, qui doit représenter le signal utile, et

un moyen de sélection (150) d'un pic de fréquence de la fenêtre de temps actuelle parmi la famille sélectionnée comme étant celui, qui doit représenter la valeur de mesure du signal utile dans cette fenêtre de temps.

```
        ┌─────────────────────┐
        │                     │
        │     Rohsignale      │────── 50
        │                     │
        └─────────────────────┘
                  │
                  ▼
        ┌─────────────────────┐
        │   Vorverarbeitung   │────── 100
        └─────────────────────┘
                  │
                  ▼
        ┌─────────────────────┐
        │  Wavelet - Denoising│────── 110
        └─────────────────────┘
                  │
                  ▼
        ┌─────────────────────┐
        │ Fouriertransformation│────── 120
        └─────────────────────┘
                  │
                  ▼
        ┌─────────────────────┐
        │  Komplexe Filterung │────── 130
        └─────────────────────┘
                  │
                  ▼
        ┌─────────────────────┐
        │ Peak-Identifikation und│───── 140
        │   Charakterisierung │
        └─────────────────────┘
                  │
                  ▼
        ┌─────────────────────┐
        │ Nutzsignal - Extraktion│──── 150
        └─────────────────────┘
                  │
                  ▼
        ┌─────────────────────┐
        │ Ausgabefilterung und│────── 160
        │  Zustandsbewertung  │
        └─────────────────────┘
                  │
                  ▼
        ┌─────────────────────┐
        │        SpO2         │
        │         PR          │────── 170
        │        Perf         │
        │        INOP         │
        └─────────────────────┘
```

Fig.1

Fig.2A

R

SpO$_2$ = 0%

SpO$_2$ = 100%

IR

Fig. 2B

Fig.3

Fig. 4A

Fig. 4B

Fig. 4C

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 262778 A
- US 4167331 A
- US 5575284 A, Athan
- WO 9612435 A, Masimo
- EP 870466 A, Kästle
- EP 0335357 A
- EP 870465 A

**In der Beschreibung aufgeführte Nicht-Patentliteratur**

- **KÄSTLE.** A New Family of Sensors for Pulsoximetry. *Hewlett-Packard Journal,* Februar 1997, vol. 48 (1), 39-53
- **ALTROCK C.** Fuzzy Logic: Band 1, Technologie. Oldenburg Verlag, 1995
- **MALLAT SG.** A Wavelet Tool Of Signal Processing. Academic Press, 1998
- **WICKERHAUSER MV.** Adaptive Wavelet-Analysis. Vieweg&Sohn Braunschweig, 1996
- Ten Lectures on Wavelets. **DAUBECHIES I.** CBMS. SIAM Press, 1992, vol. 61